# EUROPEAN PATENT SPECIFICATION

(11) **EP 2 399 740 B1**
(45) Date of publication and mention of the grant of the patent: **08.04.2020**
(21) Application number: 10743870.7
(22) Date of filing: 23.02.2010
(51) Int. Cl.: B32B 27/36, B32B 27/18, B32B 27/08, B32B 27/20

(54) **MULTILAYER LASER-MARKABLE SHEET FOR ELECTRONIC PASSPORT AND ELECTRONIC PASSPORT**
MEHRSCHICHTIGE LASERMARKIERUNGSFOLIE FÜR ELEKTRONISCHE AUSWEISE UND ELEKTRONISCHER AUSWEIS
FEUILLE MULTICOUCHE MARQUABLE AU LASER POUR PASSEPORT ÉLECTRONIQUE ET PASSEPORT ÉLECTRONIQUE

(30) Priority: 23.02.2009 JP 2009039792
(43) Date of publication of application: 28.12.2011
(73) Proprietor: Mitsubishi Chemical Corporation, Tokyo 100-8251 (JP)
(72) Inventor: SAKAGAMI, Toshinori, Yokkaichi-shi Mie 510-0883 (JP); HASHIMOTO, Akira, Yokkaichi-shi Mie 510-0883 (JP); SUEISHI, Yuuki, Yokkaichi-shi Mie 510-0883 (JP)
(74) Representative: TBK
(86) International application number: PCT/JP2010/052684
(87) International publication number: WO 2010/095747

(56) References cited:
- EP-A1- 2 281 685
- EP-A1- 2 281 686
- JP-A- 10 128 926
- JP-A- 2000 136 482
- JP-Y2- 5 041 009
- US-A1- 2006 251 869

## Description

### Technical Field

The present invention relates to a multilayer laser-markable sheet used for an electronic passport and to an electronic passport using a multilayer sheet for an electronic passport. The present invention particularly relates to a multilayer laser-markable sheet for an electronic passport capable of being marked thereon by laser beam irradiation without damage, capable of having clear letters, symbols, and images with high contrast between the original surface color and the printed portions and excellent thermal resistance and productivity, and an electronic passport using such a multilayer sheet for an electronic passport.

### Background Art

While the movement of human resources has been activated lately in the midst of ongoing international exchanges, the importance of a passport recording personal information therein been growing as means for identifying an individual and verifying identity. In particular, a passport has been playing a role as a so-called identification (identification card or the like) issued by a country, which is an official body and has reliability.

In particular, since the September, 2001 terrorist attacks, in order to tighten up immigration and departure control of each country, ICAO (International Civil Aviation Organization), which is a specialized agency of the United Nations, established a standard, and the work for introducing electronic passports has been started. Since it is important to inhibit forgery in the work, a technique of laser-marking personal names, symbols, letters, photographs and the like has been drawing attention.

By the way, since such an electronic passport can identify an individual and verify the identity, if personal information can easily be falsified or faked by a third party other than a country (or an agent on behalf of a country), the reliability on the identification falls, and it may pose a problem for the development of international exchanges or worldwide movement of human resources.

Therefore, how to inhibit falsification and forgery in the aforementioned electronic passport is an important problem. Since the electronic passport has a light, thin, short and small standard, how to clearly indicate personal names, symbols, letters, photographs and the like with high contrasts is important. Further, since realization of clear indication with high contrasts leads to previous inhibition of falsification and forgery, the market expectation is great.

For such problems, attention is paid to a technique of laser-marking personal names, symbols, letters, photographs and the like, specifically, a multilayer laser-markable sheet. For example, there are the following Patent Documents 1 and 2.

Patent Document 1 aims to obtain a multilayer laser-markable sheet having no damage in appearance, good contrasts, and excellent surface smoothness. Patent Document 1 discloses a multilayer sheet for laser marking which is a multilayer sheet having at least a surface layer and an internal layer and formed by melt-coextrusion of (A) a surface layer made of a transparent thermoplastic resin and (B) an internal layer made of a thermoplastic resin composition containing, with respect to (b-1) 100 parts by weight of a thermoplastic resin, (b-2) 0.01 to 5 parts by weight of an energy absorber absorbing a laser beam and (b-3) 0.5 to 7 parts by weight of a colorant.

Patent Document 2 aims to obtain a multilayer laser-markable sheet having no damage in appearance, good contrasts, and excellent smoothness as well as excellent thermal resistance. Patent Document 2 discloses a multilayer sheet for laser marking which is a multilayer sheet having a first surface layer/an internal layer/a second surface layer and formed by melt-coextrusion of (A) the first and the second transparent surface layers of a thermoplastic resin composition containing 0.001 to 5 parts by weight of at least one selected from mica and carbon black with respect to 100 parts by weight of a transparent thermoplastic resin and (B) the internal layer of a thermoplastic resin composition containing 0.001 to 3 parts by weight of an energy absorber absorbing a laser beam with respect to 100 parts by weight of a thermoplastic resin with a thickness ratio of the first surface layer/the internal layer/the second layer of 1:4:1 to 1:10:1.

Since each of the multilayer sheets for laser marking in Patent Documents 1 and 2 has surely excellent thermal adhesiveness between these multilayer sheets or, for example, with a thermoplastic resin sheet such as a PETG sheet or an ABS resin sheet and can obtain sufficient printability for printing letters and numbers by laser marking by laser beam irradiation, it deserves recognition. However, the inner layer of Patent Document 1 contains 0.5 to 7 parts by weight of a colorant. In the case of a so-called identification card such as a passport with personal information recorded therein as stated above, printing is performed typically at an inlay layer as an intermediate layer. In such a case, the multilayer sheet used for the outermost layer (overlay) will not give sufficient transparency because of the colorant contained. This leads to a problem of deterioration in the image clarity at a printing portion. The multilayer sheet of Patent Document 2 contains at least one type selected from mica and carbon black as a laser light absorbing agent at the surface layers as well. In the case of using this multilayer sheet at the outermost layer (overlay) of a so-called identification card such as a passport with personal information recorded therein as stated above, upon irradiation with laser light, these laser light absorbing agents contained at the surface layers will absorb laser light energy, leading to phenomena such as foaming. This results in problems such as deterioration in surface smoothness.

US2006251869 (A1) relates to a sandwich-like structure comprised of a core layer on which information may be printed using inks, a buffer layer bonded to each surface of the core layer for protecting the printed information and a laser reactive layer on, or in, which information can be written with a laser, bonded to each one of the buffer layers. The core layer may be formed of PVC (polyvinyl chloride) or PC (poly carbonate) material or any other suitable material on which information can be printed. The buffer layer may be formed of amorphous polyester material (e.g., PETG) or any other suitable material which can readily bond to the core layer and the laser reactive layer. The laser reactive layer may be polycarbonate (PC) or may be any other suitable plastic material (e.g., PVC, PET, PC, etc.) which includes a chemical which can react with a laser to produce desirable markings.

EP2281685 (A1) (Art. 54(3) EPC) relates to a laser marking multilayer sheet including a multilayer sheet A, and a multilayer sheet B that is stacked under the multilayer sheet A. The multilayer sheet A is a transparent laser marking multilayer sheet. A skin layer that forms each outermost layer of the multilayer sheet A is formed of a noncrystalline aromatic polyester resin composition, and a core layer of the multilayer sheet A is formed of a polycarbonate resin composition. The multilayer sheet B is a colored laser marking multilayer sheet. A skin layer that forms each outermost layer of the multilayer sheet B is formed of a noncrystalline aromatic polyester resin composition, and a core layer of the multilayer sheet B is formed of a polycarbonate resin composition.

EP2281686 (A1) (Art. 54(3) EPC) relates to a laser-marking multilayer sheet for an electronic passport formed by laminating five sheets of a multilayer sheet A / a multilayer sheet B / a film C / a multilayer sheet B / a multilayer sheet A. The multilayer sheet B is a colored laser-marking multilayer sheet. The film C is a laser-marking multilayer sheet made of a film for the electronic passport. The laser-marking multilayer sheet can have clear letters, symbols, and images, which are excellent in a laser-marking property and high in contrasts between the original surface color and the printed portions. The laser-marking multilayer sheet is excellent especially for inhibiting the falsification and forgery thereof.

### Prior Art Documents

### Patent Documents

Patent Document 1: JP-A-2002-273832
Patent Document 2: Japanese Patent No. 3889431

### Summary of the Invention

The present invention has been made in order to solve the aforementioned problems and aims to provide a multilayer laser-markable sheet for an electronic passport, the sheet having excellent laser-markability and high contrast between the original surface color and the printed portions and enabling clear letters, symbols and images, being excellent in thermal adhesiveness in a lamination step of multilayer sheets, and further having improved transparency in terms of the whole beam transmittance, having a sheet conveyance property, releasability from a die after thermal press, thermal resistance, foldability and wear resistance. The present invention further aims to provide an electronic passport using such a multilayer laser-markable sheet for an electronic passport. In particular, they are excellent in inhibiting the falsification and forgery thereof.

The present invention further aims to provide a multilayer laser-markable sheet for an electronic passport having a lamination structure using a laminating film having strength, flexibility, and transparency at the central portion of the lamination sheet in order to be bound with a cover or a back cover of an electronic passport by a simple manufacturing step such as machine sewing when the electronic passport is manufactured using the above-stated multilayer laser-markable sheet, and to provide an electronic passport using such as a multilayer laser-markable sheet for an electronic passport.

The present invention provides the following multilayer laser-markable sheet for an electronic passport.
[1] A multilayer laser-markable sheet for an electronic passport comprising three sheets of a sheet A/a multilayer sheet B/a sheet C as a basic constitutional unit, wherein sheet A includes a transparent polycarbonate resin composition including a thermoplastic polycarbonate resin and a laser light energy absorbing agent, the sheet A having an entire thickness of 50 to 200 µm, the multilayer sheet B includes a colored multilayer sheet including skin layers and a core layer, the skin layers at both outermost layers including a thermoplastic polyester resin, the core layer of the multilayer sheet B including a transparent thermoplastic resin including a thermoplastic polycarbonate resin, at least one layer of the skin layers and the core layer of the multilayer sheet B including at least one type selected from a dye and a pigment, and the multilayer sheet B having an entire thickness of 100 to 300 µm, and the core layer having a ratio of thickness thereof to the entire thickness of 30% or greater and less than 85%; and the sheet C comprises a sheet including at least one type selected from a thermoplastic polyester resin, a thermoplastic polyamide resin and a thermoplastic polyurethane resin, woven fabric or nonwoven fabric including at least one type selected from a thermoplastic polyester resin and a thermoplastic polyamide resin, or a laminate sheet including the woven fabric or the nonwoven fabric and a sheet including at least one type selected from a thermoplastic polyester resin, a thermoplastic polyamide resin and a thermoplastic polyurethane resin, the sheet C having a thickness of 50 to 500 µm, characterized in that the sheet A includes a single layer sheet, or the sheet A is a multilayer sheet including five layers or preferably three layers, wherein said three layers are disposed as in a skin layer /a core layer /a skin layer so that the two skin layers are on both of the outermost sides with a core layer as one layer being disposed between the two skin layers, and where said five layers are formed by disposing alternately skin layers and core layers as in a skin layer /a core layer /a skin layer /a core layer /a skin layer so that the two skin layers are on both of the outermost sides, the skin layers includes a thermoplastic polycarbonate resin, the core layer includes a transparent polycarbonate resin composition including a thermoplastic polycarbonate resin and a laser light energy absorbing agent, the sheet A has an entire thickness of 50 to 200 µm, and has a ratio of thickness of the core layer to the entire thickness of the sheet A of 20% or greater and less than 90%.
[2] The multilayer laser-markable sheet for an electronic passport according to [1], wherein one end of the sheet C has a protruding portion partially protruding by 5 to 100 mm from the sheet A and the multilayer sheet B.
[3] The multilayer laser-markable sheet for an electronic passport according to [1] or [2], including lamination of five sheets including the sheet A/the multilayer sheet B/the sheet C/the multilayer sheet B/the sheet A or lamination of five sheets of the sheet A/the multilayer sheet B/an inlet hinged sheet including the sheet C/the multilayer sheet B/the sheet A.
[4] The multilayer laser-markable sheet for an electronic passport according to [3], wherein the inlet hinged sheet includes a sheet F for an electronic passport, and an IC chip and an antenna provided in the sheet F for an electronic passport, the sheet F for an electronic passport includes a thermal fusion bonded laminate sheet including woven fabric or nonwoven fabric including at least one type selected from a thermoplastic polyester resin and a thermoplastic polyurethane resin and at least one type selected from a thermoplastic polyester resin and thermoplastic polyamide, the sheet F for an electronic passport having a thickness of 50 to 500 µm.
[5] The multilayer laser-markable sheet for an electronic passport according to [1] or [2] comprising, using an inlet sheet, lamination of six sheets including the sheet A/the multilayer sheet B/the inlet sheet/the sheet C/the multilayer sheet B/the sheet A.
[6] The multilayer laser-markable sheet for an electronic passport according to [5], the inlet sheet includes a sheet G for an electronic passport, and an IC chip and an antenna provided in the sheet G for an electronic passport, the sheet G for an electronic passport includes a sheet form including at least one type selected from a thermoplastic polyester resin and a thermoplastic polyurethane resin, or the sheet G for an electronic passport includes a sheet form including a composite material including at least one selected from a thermoplastic polyester resin and a thermoplastic polyurethane resin and inorganic fillers, or a polymer alloy including at least one type selected from a thermoplastic polyester resin and a thermoplastic polyurethane resin and a resin at least one type selected from an acrylic resin, an ABS resin and an amorphous polyester resin, and the sheet G for an electronic passport has a thickness of 50 to 400 µm.
[7] The multilayer laser-markable sheet for an electronic passport according to any one of [1] to [6], wherein at least one surface of at least one of the sheet A, wherein the multilayer sheet B and the sheet C is subjected to matting with an average roughness (Ra) of 0.1 to 5 µm.
[8] An electronic passport comprising: the multilayer laser-markable sheet for an electronic passport according to any one of [2] to [7], the protruding portion of the sheet C being machine-sewn bound or bonded, or being machine-sewn bound and bonded with a cover or a back cover of the electronic passport.
[9] A laser marking method for laser-marking to the multilayer laser-markable sheet for an electronic passport according to any one of [1] to [7] or the electronic passport according to [8], wherein printing is performed by applying laser light from a side of the sheet A laminated in the multilayer laser-markable sheet.

The present invention has excellent effects of providing a multilayer laser-markable sheet for an electronic passport and an electronic passport, the sheet having excellent laser-markability and high contrast between the original surface color and the printed portions and enabling clear letters, symbols and images, being excellent in thermal adhesiveness in a lamination step of multilayer sheets, and further having improved transparency in terms of the whole beam transmittance, having a sheet conveyance property, releasability from a die after thermal press, thermal resistance, foldability and wear resistance. Particularly, the present invention has excellent in inhibiting the falsification and forgery.

As an additional excellent effect of the present invention, when manufacturing an electronic passport using the aforementioned multilayer laser-markable sheet, in order to bind the sheet with a cover or a back cover of the electronic passport by a simple manufacturing process such as machine sewing, a multilayer laser-markable sheet for an electronic passport and an electronic passport using the multilayer laser-markable sheet for an electronic passport provided includes a lamination structure using woven fabric (mesh cloth) or nonwoven fabric made of polyester or polyamide having strength, flexibility and transparency at a center portion of the lamination sheet.

### Brief Description of the Drawings

[Fig. 1] Fig. 1 is a schematic view showing an embodiment of a multilayer laser-markable sheet of the present invention, which is a cross-sectional view of a multilayer laser-markable sheet for an electronic passport including three sheets of sheet A/multilayer sheet B/sheet C as a basic constitutional unit.
[Fig. 2A] Fig. 2A is a schematic view showing an embodiment of a multilayer laser-markable sheet of the present invention, which is a cross-sectional view of a multilayer laser-markable sheet where the sheet A is a single layer sheet.
[Fig. 2B] Fig. 2B is a schematic view showing an embodiment of a multilayer laser-markable sheet of the present invention, which is a cross-sectional view of a multilayer laser-markable sheet where the sheet A is a three-layered sheet.
[Fig. 3] Fig. 3 is a cross-sectional schematic view of a state of a multilayer laser-markable sheet of the present invention provided with a protruding portion.
[Fig. 4A] Fig. 4A is a schematic view showing an exemplary case of a multilayer laser-markable sheet of the present invention used in an e-Card type passport.
[Fig. 4B] Fig. 4B is a schematic view showing an exemplary case of a multilayer laser-markable sheet of the present invention used in an e-Cover type passport.
[Fig. 5A] Fig. 5A is a side view schematically illustrating the measurement of sheet flexibility.
[Fig. 5B] Fig. 5B is a side view schematically illustrating the measurement of sheet flexibility.
[Fig. 6] Fig. 6 is a schematic view showing a tensile test for the measurement of strength at a machine-sewn portion.
[Fig. 7] Fig. 7 is a schematic view showing the surface of an inlet sheet E with an IC chip and an antenna provided therein.
[Fig. 8] Fig. 8 is a cross-sectional schematic view of a multilayer laser-markable sheet of the present invention, showing a five-layer structured sheet including an inlet sheet E provided with an IC chip and an antenna.
[Fig. 9] Fig. 9 is a cross-sectional schematic view of a multilayer laser-markable sheet of the present invention, showing a five-layer structured sheet including an inlet sheet E provided with an IC chip and an antenna.

### Mode for Carrying out the Invention

Hereinafter, modes for carrying out a multilayer laser-markable sheet for an electronic passport of the present invention will be described specifically. The present invention widely includes a multilayer laser-markable sheet for an electronic passport including the invention-specifying matters and is not limited to the following embodiments.

### [1] Structure of multilayer laser-markable sheet for electronic passport of the present invention:

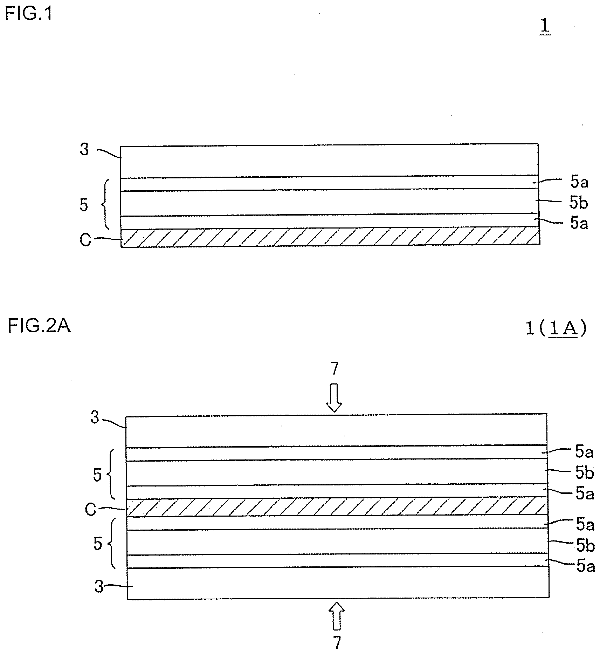

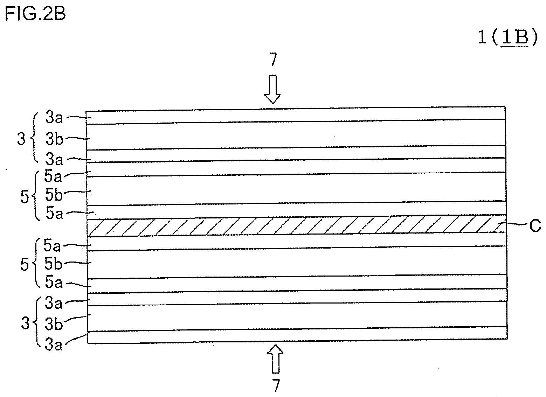

As shown in Figs. 1, 2A and 2B, a multilayer laser-markable sheet of a first aspect of the invention is a multilayer laser-markable sheet (1A, 1B) for an electronic passport including three sheets of sheet A/multilayer sheet B/sheet C as a basic constitutional unit. The sheet A (reference numeral 3) includes a transparent polycarbonate resin composition including a thermoplastic polycarbonate resin and a laser light energy absorbing agent, and includes a sheet with the entire thickness of the sheet A of 50 to 200 µm. The multilayer sheet B (reference numeral 5) includes skin layers 5a and a core layer 5b, where the skin layers 5a are at both of the outermost layers and are made of a thermoplastic polyester resin, the core layer 5b of the multilayer sheet B is made of a transparent thermoplastic resin including a thermoplastic polycarbonate resin, and at least one of the skin layers and the core layer of the multilayer sheet B includes at least one type selected from a dye and a pigment. Further, the multilayer sheet B is a colored multilayer sheet with the entire thickness of the multilayer sheet B of 100 to 300 µm, where the ratio of thickness of the core layer to the entire thickness of the multilayer sheet B is 30% or greater and less than 85%. The sheet C (symbol C) is a sheet including at least one selected from a thermoplastic polyester resin, a thermoplastic polyamide resin and a thermoplastic polyurethane resin, woven fabric or nonwoven fabric including at least one type selected from a thermoplastic polyester resin and a thermoplastic polyamide resin, or a laminate sheet including the woven fabric or nonwoven fabric and a sheet including at least one type selected from a thermoplastic polyester resin, a thermoplastic polyamide resin and a thermoplastic polyurethane resin. The sheet C has a thickness of 50 to 500 µm.

According to claim 1 (alternative (i)) and as illustrated in Fig. 2A, the sheet A is configured as a single layer sheet.

More specifically, the following multilayer laser-markable sheet for an electronic passport 1B also is preferable as the multilayer laser-markable sheet for an electronic passport of the present invention. That is, according to claim 1 (alternative (ii)) and as illustrated in Fig. 2B, a multilayer laser-markable sheet for an electronic passport 1B alternatively includes the lamination of three sheets of sheet A/multilayer sheet B/sheet C, where the sheet A (reference numeral 3) includes at least three-layered sheet of skin layers 3a and a core layer 3b. The skin layers 3a are made of a thermoplastic polycarbonate resin, and the core layer 3b is made of a transparent polycarbonate resin composition including a thermoplastic polycarbonate resin and a laser light energy absorbing agent. The sheet A has the entire thickness of 50 to 200 µm, and is a multilayer sheet where the ratio of thickness of the core layer to the entire thickness of the sheet A is 20% or greater and less than 90%. The multilayer sheet B (reference numeral 5) includes skin layers 5a and a core layer 5b, where the skin layers 5a as both of the outermost layers are made of a thermoplastic polyester resin and the core layer 5b of the multilayer sheet B is made of a transparent thermoplastic resin including a thermoplastic polycarbonate resin, and at least one of the skin layers and the core layer of the multilayer sheet B includes at least one type selected from a dye and a pigment. Further, the multilayer sheet B is a colored multilayer sheet with the entire thickness of the multilayer sheet B of 100 to 300 µm, where the ratio of thickness of the core layer to the entire thickness of the multilayer sheet B is 30% or greater and less than 85%. The sheet C (symbol C) is a sheet including at least one selected from a thermoplastic polyester resin, a thermoplastic polyamide resin and a thermoplastic polyurethane resin, woven fabric or nonwoven fabric including at least one type selected from a thermoplastic polyester resin and a thermoplastic polyamide resin, or a laminate sheet including the woven fabric or nonwoven fabric and a sheet including at least one type selected from a thermoplastic polyester resin, a thermoplastic polyamide resin and a thermoplastic polyurethane resin. The sheet C is configured as a multilayer laser-markable sheet B having a thickness of 50 to 500 µm.

Herein, the descriptions such as "including three sheets (including the lamination of five sheets)" and the like refer to the state after the lamination of three sheets (five sheets), which does not limit the lamination method therefor. The same goes for the description of "including six sheets". The descriptions of "multilayer sheet" and "a sheet including the lamination of three layers" also refer to the state after the lamination of a plurality of layers (or three layers), which do not limit the lamination method therefor. The same goes for the following descriptions unless otherwise specified.

### [A] Sheet A:

The sheet A of the present invention includes a single layer transparent sheet including a core layer only (single layer sheet) or includes a transparent sheet including a skin layer and a core layer. This sheet A is preferably configured as a transparent laser-markable sheet at which a marking section can be formed by laser irradiation.

### [A-1] Sheet A:

When the sheet A is configured as a single layer transparent sheet in a single layer structure, it is preferably formed by, but not limited to, melt coextrusion.

When the sheet A is configured as a single layer transparent sheet in a single layer structure, the sheet A may be made of a thermoplastic polycarbonate resin (PC). Further, the sheet A is made of a transparent polycarbonate resin composition including this thermoplastic polycarbonate resin and a laser light energy absorbing agent described later. The sheet A is particularly preferably made of a transparent resin layer or a transparent resin composition including a transparent thermoplastic polycarbonate resin as a main component. This thermoplastic polycarbonate resin preferably used includes, but not limited, a resin with a melt volume rate of 4 to 20. A resin with a melt volume rate less than 4 is useful for the improvement of toughness of a sheet, but has poor forming workability. Therefore, such a resin will cause a trouble in the practical use and is not preferable. A resin with a melt volume rate more than 20 leads to poor toughness of a sheet obtained, and is not preferable. The sheet A made of a transparent resin layer including a polycarbonate resin (PC) can suppress a so-called "bulge" due to foaming at a marking section by laser light irradiation. Such a sheet A further can improve wear resistance at a marking section when laser light is applied thereto.

When the sheet A is configured as a single layer sheet in a single layer structure, it is important that such a sheet has high transparency. To this end, as a raw material of the sheet A configured as a single layer sheet, a resin that does not impair the transparency of a polycarbonate resin and filler can be used without particular limitation. In order to improve scratch resistance or thermal resistance, a general polycarbonate resin and a special polycarbonate resin may be blended or a polycarbonate resin and a polyallylate resin may be blended, for example.

More preferably, the sheet A is configured as a sheet in an "at least three-layered" structure including skin layers and a core layer. Herein, the "three-layered sheet" herein refers to "at least three layers", and is not limited to a three-layered sheet. In other words, the description of "three-layered sheet" for the sheet A is for convenience in explanation, and the "three-layered sheet" refers to a "sheet including at least three layers" and does not limit the sheet A to a sheet including "three layers". That is to say, as long as the sheet A includes three or more layers, any sheet including five layers, seven layers or any larger odd-numbered layers is included in the scope of the sheet A.

The description of "three-layered sheet" refers to the state after the lamination of three layers including skin layers and a core layer, which does not limit the lamination method therefor.

When the sheet A is configured as a sheet in an "at least three layered" structure including skin layers and a core layer, the sheet is preferably laminated by, but not limited to, melt coextrusion.

When the sheet A is configured as a sheet in a multilayer structure such as "at least three-layered" structure, it is necessary that the skin layers of the sheet A described later are disposed on outermost sides of the sheet having the multilayer structure on both of the sides of the sheet in such a manner that the core layer is sandwiched between the skin layers. Incidentally, though there is no particular limitation on the thickness of the skin layers of the sheet A, it is more preferable that the skin layers are formed to have a thickness in the predetermined range described later.

Herein, even in the case that the sheet A is configured of the aforementioned "larger odd-numbered layers", when the structure has a too large number of layers, a thickness of each of the skin layers and core layers becomes too small. In such a case, so-called die sticking may occur in the hot press step during lamination. Therefore, the sheet A preferably includes five layers, more preferably three layers.

Here, the reason why the sheet A in the present embodiment is configured of odd-numbered layers as described above is because a multilayer sheet of even-numbered layers results in the same configuration as that of a multilayer sheet of odd-numbered layers. For example, a sheet including four layers has a disposition of a skin layer (PC)/a core layer (PC)/a core layer (PC)/a skin layer (PC), which is, after all, the same configuration as that of a sheet of odd-numbered layers.

For example, as for a sheet A including three layers (so-called "three-layered sheet") as an example, the layers are disposed as in a skin layer (PC)/a core layer (PC)/a skin layer (PC) so that the two skin layers are on both of the outermost sides (one side and the other side) with a core layer as one layer being disposed between the two skin layers in the sheet A as a multilayer sheet. As for a multilayer sheet including five layers as an example, the layers are disposed as in a skin layer (PC)/a core layer (PC)/a skin layer (PC)/a core layer (PC)/a skin layer (PC) so that the two skin layers are on both of the outermost sides (one side and the other side). The sheet A may be formed by disposing alternately skin layers and core layers. Herein, even the configuration of a single layer transparent laser-markable sheet including a core layer only as stated above has sufficient laser color saturation, leading to the effect of the present invention. More preferably, however, the sheet A is formed as a sheet in a multilayer configuration as stated above. Such a multilayer structured sheet A enables laser light irradiation with higher power than in a single layer sheet including a core layer only, and can increase density of a laser marking section. Additionally, such a configuration can suppress a so-called "bulge" due to foaming at a marking section at the core layer, and can maintain the surface smoothness. Furthermore, as compared with the case without the skin layer, such a multilayer configuration leads to a synergistic effect of improvement in wear resistance of the marking section because a skin layer is laminated above the marking section at the core layer.

It is desirable that the entire thickness (total thickness) of the sheet A, whether it is a single layer or a three-layered sheet, be 50 to 200 µm. The entire thickness of the sheet A less than 50 µm leads to insufficient laser markability, and is not preferable. The entire thickness of the sheet A exceeding 200 µm leads to difficulty in actual use as an electronic passport. For instance, when a multilayer sheet for an electronic passport is formed using a multilayer laser-markable sheet including a sheet A with a thickness exceeding 200 µm and a multilayer sheet B, the entire thickness thereof will exceed as thick as 800 µm at maximum, which is difficult for actual use.

In addition, when the sheet A is a multilayer sheet including skin layers and a core layer (so-called three-layered sheet), it is preferable that the entire thickness (total thickness) of the sheet A be 50 to 200 µm and the ratio of the thickness of the core layer to the entire sheet thickness of the multilayer sheet be 20% or greater and less than 90%. The thickness of the core layer less than 20% leads to insufficient laser markability, and is not preferable. The thickness of the core layer of 90% or greater makes the skin layers too thin. When laser light with high power is applied to the thus configured sheet, the laser light energy absorbing agent mixed in the core layer will absorb the laser light energy and converts the energy into heat, so that high heat tends to be generated. This degrades the effect of suppressing a so-called "bulge" at the laser light application section, and is not preferable. Even if favorable laser color saturation can be obtained by regulating laser light energy, wear resistance at the laser marking section is not sufficient as compared with the configuration of the thickness of a skin layer within the aforementioned desired range, and is not preferable.

The aforementioned desired thickness of the entire three-layered sheet A including a single layer sheet or a three-layered sheet can realize local properties such as properties of the sheet A easily. Not only the total thickness of the three-layered sheet as a whole but also the ratio of the skin layers and the core layer making up the three-layered sheet to the three-layered sheet are set at the desired ratio as stated above, whereby laser markability can be easily improved in association with the entire thickness of the three-layered sheet in the desired ratio.

The whole beam transmittance of the sheet A is preferably 70% or greater and more preferably 85% or greater. For instance, when the multilayer laser-markable sheet of the present invention is used for an electronic passport or for a lamination sheet for an electronic passport, printing is typically performed for these purposes. To this end, below a transparent multilayer laser-markable sheet, a white sheet with printing such as letters and figures being performed thereon (hereinafter printing on a white sheet such as letters and figures is called "printing section" as needed) is laminated, and then laser light is applied at a non-printing section in the sheet A as an outermost layer so as to turn the section in black, to perform marking of images and letters for use. In this way, a design at the printing section is often combined with anti-counterfeit by laser marking for use. Manufacturing and usage of such a combination can lead to the clarity at the printing section because the original surface color is white. Black/white contrast at the laser marking section further can lead to clear images. That is, in the case of lamination a white sheet, for example, the transparency of an outermost layer in the aforementioned desired range of whole beam transmittance can increase the clarity of black/white contrast. In other words, such transparency of the outermost layer become important to secure the clarity of the printing section and the clarity of black/white contrast at the laser marking section. On the other hand, the whole beam transmittance less than 70% is not preferable because it causes an insufficient black/white contrast and leads to a failure in securing sufficient markability, and leads to a problem for visibility of printing because printing is performed on the white sheet as the original surface.

Note here that the "whole beam transmittance" is an index indicating the ratio of light passing through a film or the like with respect to light incident to the film. For instance, when incident light entirely passes, the whole beam transmittance will be 100%. The "whole beam transmittance" in the present specification shows a value by the measurement in keeping with JIS-K7105 (light transmittance and whole beam reflectance), and the whole beam transmittance may be measured using a haze meter produced by Nippon Denshoku Industries Co., Ltd. (trade name: "NDH 2000") or a spectrophotometer (trade name "EYE7000" produced by GretagMacbeth GmbH), for example.

### [A-1-1] Skin Layer in Sheet A

When skin layers are formed in the sheet A, i.e., when the sheet A is configured in a multilayer structure as a "three-layered structure", the skin layers are configured as both outermost layers disposed on outer sides of the three-layered sheet. That is, these skin layers serve as surface layers (outermost layers) of the three-layered sheet so as to sandwich a core layer in the multilayer sheet described later from both end face sides (outer sides) .

Herein, the skin layers preferably have the same thickness. For instance, in the case of a multilayer lamination and a card for an electronic passport, laser marking is performed from the front side and the back side. Then, when the sheet A is configured with skin layers of different thicknesses, the skin layers at the outermost surface layer and the lowermost back layer of the lamination have different thicknesses. In such a case, different problems will arise depending on which surface of the sheet A facing upward, i.e., which surface of the sheet A being disposed toward the multilayer sheet B. For example, when the sheet A having skin layers of different thicknesses is disposed while letting the thicker skin layer at the outermost surface layer (on the opposite side of the multilayer sheet B), since the skin layer of the sheet A located above the marking section is thick, letters printed at the marking section will appear light. This is because, when laser light is applied from the outermost surface side, marking is performed at the core layer of the sheet A. Conversely, when the sheet A having skin layers of different thicknesses is disposed while letting the thinner skin layer at the outermost surface layer (on the opposite side of the multilayer sheet B), letters printed at the marking section will appear dark. In this way, skin layers of different thicknesses lead to a trouble that letters printed at the marking section appear differently depending on how to dispose the sheet A. Particularly, in the case of using a three-layered sheet of PETG/PC (laser-markable sheet)/PETG, PETG (PETG layer) and PC (PC layer) have different refractive indexes. Accordingly, as compared with the case of the three-layered sheet of PC/PC (laser-markable sheet)/PC, this trouble tends to be more remarkably. In the case of using a three-layered sheet of PETG/PC (laser-markable sheet)/PETG, these PETG layers contribute to improve low-temperature thermal adhesiveness with a print inlay sheet (inlay sheet subject to printing) as well. That is, thicker skin layers as these PETG (PETG layers) lead to excellent low-temperature thermal adhesiveness. In other words, in the case where the sheet A is a three-layered sheet of PETG/PC (laser-markable sheet)/PETG and a thinner skin layer of the sheet A is disposed on the multilayer sheet side, low-temperature thermal adhesiveness thereof will be degraded. Further in such a case, since the skin layer at the outermost surface layer is thick, letters printed at the marking section will appear light. On the other hand, in the case where the sheet A is a three-layered sheet of PETG/PC (laser-markable sheet)/PETG and a thicker skin layer of the sheet A is disposed on the multilayer sheet side, both of a printing property at the marking section and low-temperature thermal adhesiveness become excellent. In this way, the sheet including skin layers of different thicknesses makes the laser markability of the lamination different greatly depending on the disposition of the sheet A as the three-layered sheet. In the case of the sheet A as the three-layered sheet including PETG/PC (laser-markable sheet)/PETG, low-temperature thermal adhesiveness of the lamination varies differently. Accordingly, the skin layers on both sides of the sheet A preferably have the same thickness.

These skin layers are made of a thermoplastic polycarbonate resin (PC), and particularly preferably are made of a transparent resin layer including a transparent thermoplastic polycarbonate resin as a main component. This thermoplastic polycarbonate resin preferably used includes, but not limited, a resin with a melt volume rate of 4 to 20. A resin with a melt volume rate less than 4 is useful for the improvement of toughness of a sheet, but has poor forming workability. Therefore, such a resin will cause a trouble in the practical use and is not preferable. A resin with a melt volume rate more than 20 leads to poor toughness of a sheet obtained, and is not preferable. Such a skin layer made of a thermoplastic polycarbonate resin (PC) or a transparent resin layer including a thermoplastic polycarbonate resin as a main component can suppress a so-called "bulge" due to foaming at a marking section by laser light irradiation. Such a skin layer further can improve wear resistance at a marking section when laser light is applied thereto. Note here that "including a thermoplastic polycarbonate resin as a main component" means that 50% by mass or greater of a thermoplastic polycarbonate resin is included.

It is important that the skin layers have high transparency. To this end, a resin that does not impair the transparency of a thermoplastic polycarbonate resin and filler can be used without particular limitation. In order to improve scratch resistance or thermal resistance of the skin layers, a general polycarbonate resin and a special polycarbonate resin may be blended or a polycarbonate resin and a polyallylate resin may be blended, for example.

### [A-1-2] Core Layer in Sheet A:

As described above, when the sheet A is configured as a three-layered sheet including the skin layers on the outermost layers, the core layer is configured as a so-called nucleus layer disposed at the center of the three-layered sheet. That is, in the configuration of a three-layered sheet, the core layer is formed as a center layer of the three-layered sheet so as to be sandwiched between the two skin layers disposed on the outermost sides. This core layer is preferably formed to have a ratio of the thickness to the entire sheet of 20% or greater and less than 90%. More preferably, the ratio is 40% or greater and less than 85%. The ratio less than 20% makes the thickness of a marking section by laser light irradiation thinner, so that the printed density becomes light. As a result, visibility of letter and images at the marking section degrades, which is not preferable. On the other hand, the ratio of 90% or greater makes the thickness of the skin layers too thin, and therefore it becomes difficult to form the skin layers on both sides of the sheet A with a uniform thickness by three-layer melt-coextrusion. As a result, the thicknesses of the skin layers on both sides cannot be controlled, so that one of the skin layers becomes thin (the other side accordingly becomes thick), or one of the skin layers becomes thick (the other side accordingly becomes thin). Therefore, the function of the skin layers to protect the laser marking section, i.e., scratch resistance (wear resistance) will be degraded greatly, so that the skin layers become useless.

This core layer is made of a thermoplastic polycarbonate resin, and is made of a transparent polycarbonate resin composition including this thermoplastic polycarbonate resin and a laser light energy absorbing agent described later. The core layer is particularly preferably made of a transparent resin layer including a transparent thermoplastic polycarbonate resin as a main component and a transparent resin composition. This thermoplastic polycarbonate resin preferably used includes, but not limited, a resin with a melt volume rate of 4 to 20. A resin with a melt volume rate less than 4 is useful for the improvement of toughness of a sheet, but has poor forming workability. Therefore, such a resin will cause a trouble in the practical use and is not preferable. A resin with a melt volume rate more than 20 leads to poor toughness of a sheet obtained, and is not preferable.

### [A-1-3] Laser Light Energy Absorbing Agent

The sheet A preferably includes a laser light energy absorbing agent. When the sheet A is a single layer sheet in a single layer structure, the sheet A preferably includes a laser light energy absorbing agent, and when the sheet A is a at least three-layered sheet, the core layer thereof preferably includes a laser light energy absorbing agent. Such a configuration enables clear letters, symbols, and images with excellent laser color saturation for laser marking and with high contrasts between the original surface color and the printed portions. Further when the sheet A is a single layer sheet in a single layer structure, the sheet A preferably includes 0.0005 to 1 part by mass of a laser light energy absorbing agent with respect to 100 parts by mass of a transparent resin including a thermoplastic polycarbonate resin as a main component. When the sheet A includes at least three-layered sheet, the core layer thereof preferably includes 0.0005 to 1 part by mass of a laser light energy absorbing agent with respect to 100 parts by mass of a transparent resin including a polycarbonate resin as a main component. This enables clear letters, symbols, and images with excellent laser color saturation for laser marking and with high contrasts between the original surface color and the printed portions.

Exemplary laser light energy absorbing agents include at least one type selected from the group consisting of carbon black, titanium black, metal oxides, metal sulfides and metal nitrides. When the sheet A is a single layer sheet in a single layer structure, the laser light energy absorbing agent more preferably includes at least one type or two types or more of carbon black, titanium black and metal oxides. When the sheet A includes at least three-layered sheet, the core layer thereof more preferably includes at least one type or two types or more of carbon black, titanium black and metal oxides.

Herein, carbon black, titanium black, metal oxides, metal sulfides and metal nitrides preferably have an average particle diameter less than 150 nm. Carbon black, titanium black, metal oxides, metal sulfides and metal nitrides more preferably have an average particle diameter less than 100 nm. Further preferably, carbon black with an average particle diameter of 10 to 90 nm and a dibutylphthalate (DBT) oil absorption amount of 60 to 170 ml/100 gr or such carbon black in combination with titanium black or a metal oxide with an average particle diameter less than 150 nm is used. When the average particle diameter of carbon black, titanium black, metal oxides, metal sulfides and metal nitrides exceeds 150 nm, transparency of the sheet deteriorates, or serious unevenness occurs on the surface of the sheet, which is not preferable. When the average particle diameter of carbon black is less than 10 nm, laser color saturation deteriorates, and handling is difficult because it is too fine, which is not preferable. In addition, when the DBT oil absorption is less than 60 ml/100 gr, dispersibility is poor, while when it exceeds 170 ml/100 gr, it has a poor opacifying property, which is not preferable.

For the metal oxides, exemplary metal making the oxides include zinc, magnesium, aluminum, iron, titanium, silicon, antimony, tin, copper, manganese, cobalt, vanadium, bismuth, niobium, molybdenum, ruthenium, tungsten, palladium, silver and platinum. Further, examples of the composite metal oxide include ITO, ATO, and AZO.

Examples of the metal sulfide include zinc sulfide and cadmium sulfide. Examples of the metal nitride include titanium nitride.

In this way, carbon black, metal oxides, and composite metal oxides are preferably used as the energy absorber independently or in combination.

As the addition amount (blend amount) of the energy absorber, 0.0005 to 1 part by mass, more preferably 0.008 to 0.1 part by mass, of carbon black is added (blended). When carbon black and at least one type selected from metal oxides, metal sulfides and metal nitrides with an average particle diameter less than 150 nm are used together, the blend amount of the mixture is 0.0005 to 1 part by mass, more preferably 0.0008 to 0.5 part by mass.

The reason why the addition amount (blend amount) of the energy absorber is adjusted at a desired amount in this way is that the sheet A is preferably transparent. That is, in the case of the usage for an electronic passport or for a lamination sheet for an electronic passport, a transparent laser-markable sheet (a layer called an overlay) is laminated on a white sheet subjected to printing (a layer called an inlay) for use as an electronic passport or as the lamination sheet for an electronic passport. The overlay not subjected to printing is irradiated with laser light to produce black for marking of images and letters. Then, a design at the printing section is often combined with an anti-counterfeit effect by laser marking for use in an electronic passport or a lamination sheet for an electronic passport. Manufacturing and usage of an electronic passport or a lamination sheet for an electronic passport in such a combination can lead to the clarity at the printing section because the original surface color is white. Black/white contrast at the laser marking section further can lead to clear images. In other words, deterioration in the transparency of the overlay layer laminated on the aforementioned inlay layer causes problems such as unclarity of printed letters and images and poor black/white contrast at the laser marking section, and therefore a problem in actual use arises in an electronic passport or a lamination sheet for an electronic passport. Accordingly, carbon black with a smaller average particle diameter is preferably used. In the case of using, as a laser energy absorbing agent, the mixture of carbon black and at least one type selected from other metal oxide, metal sulfide, metal carbonate and metal silicate as well, the average particle diameter of these metal oxide and metal sulfide is at least less than 150 nm and preferably less than 100 nm.

Therefore, when the average particle diameter of these laser energy absorbers exceeds 150 nm, the transparency of the sheet A as a transparent laser-markable sheet (overlay) deteriorates, which is not preferable. In addition, when the blend amount of these laser energy absorbers exceeds 1 part by mass, transparency of the multilayer sheet deteriorates, and the resin is deteriorated because of too much energy amount absorbed. Therefore, a sufficient contrast cannot be obtained. On the other hand, when the addition amount of the laser energy absorber is less than 0.0005 part by mass, a sufficient contrast cannot be obtained, which is not preferable. The addition amount of these laser energy absorbers exceeding 1 part by mass causes not only unpreferable deterioration in transparency of the sheet A but also abnormal heat generation. As a result, resin is decomposed and foaming is generated, thus failing to perform desired laser marking.

### [A-1-4] Lubricant, Antioxidant and Anticolorant:

In the present embodiment when the sheet A is a single layer sheet in a single layer structure, the sheet A preferably includes a lubricant. When the sheet A includes a so-called three-layered sheet, skin layers thereof preferably include a lubricant. The lubricant contained can prevent fusion bonding to a pressing plate during hot press.

Further, in the present embodiment, when the sheet A is a single layer sheet in a single layer structure, the sheet A preferably includes at least one type selected from an antioxidant and an anticolorant and at least one type selected from a UV absorbing agent and a light stabilizer as needed. When the sheet A includes a so-called three-layered sheet, skin layers or skin layers and a core layer thereof preferably include at least one type selected from an antioxidant and an anticolorant and at least one type selected from a UV absorbing agent and a light stabilizer as needed. The addition (blending) of at least one type of an antioxidant and an anticolorant effectively influences on the property deterioration and the hue stabilization due to decrease in the molecular weight during forming process. Examples of the at least one type selected from an antioxidant and an anticolorant include a phenol based antioxidant and a phosphite ester based anticolorant. The addition (blending) of at least one type selected from a UV absorbing agent and a light stabilizer effectively suppresses a lightfastness property from deteriorating during the storage of the sheet A and in the actual usage of an electronic passport as a final product.

Examples of the phenol based antioxidant include α-tocopherol, butylhydroxytoluene, sinapyl alcohol, vitamin E, n-octadecyl-3-(3,5-di-t-butyl-4-hydroxyphenol) propionate, 3-5-di-t-butyl-4-hydroxytoluene, pentaerythrityl-tetrakis[3-(3,5-di-t-butyl-4-hydroxyphenyl) propyonate], triethyleneglycol-bis[3-(3-t-butyl-5-methyl-4-hydroxyphenyl)propionate], 1,6-hexanediol-bis[3-(3,5-di-t-butyl-4-hydroxyphenyl) propionate], 2-tert-butyl-6-(3'-tert-butyl-5'-methyl-2'-hydroxybenzil)-4-methylphenylacrylate, 2,6,-di-tert-butyl-4-(N,N-dimethylaminomethyl)phenol, 3-5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl) propionate, 1,6-hexanediolbis[3-(3,5-di-tert-butyl-4-hydroxyphenyl)propionate], bis[2-tert-butyl-4-methyl6-(3-tert-butyl-5-methyl-2-hydroxybenzyl)phenyl]telephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-tiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propyonyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris2[3(3,5-di-tert-butyl-4-hydroxyphenyl)propyonyloxy]ethylisocyanurate, and tetrakis[3-(3,5-di-tert-butyl-4-hydroxyphenyl)propyonyloxymethyl]methane.

Above all, preferable are n-octadecyl-3-(3,5-di-tert-buryl-hydroxyphenyl)propyonate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, and tetrakis[3-(3,5-di-tert-butyl-4-hydroxyphenyl)propyonyloxymethy]methane, and particularly preferable is n-octadecyl-3-(3,5-di-tert-butyl-4-hydroxyphenyl)propionate. The above hindered phenol based antioxidants may be used alone or in combination of two or more types.

Examples of the phosphite ester based anticolorant include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phospite, monodecyldiphenyl phosphite, monooctyldiphenyl phosphite, 2,2-methylenebis(4,6-di-tert-butylphenyl)octyl phosphite, tris(diethylphenyl) phosphite, tris(di-iso-propylphenyl) phosphite, tris(di-n-butylphenyl) phosphite, tris (2,4,-di-tert-butylphenyl) phosphite, tris(2,6-di-tert-butylphenyl) phosphite, distearylpentaerythritol diphosphite, bis(2,4-di-tert-butylphenyl)pentaerithritol diphosphite, bis(2,6-di-tert-butyl-4-methylphenyl)pentaerithritol diphosphite, bis(2,6-di-tert-butyl-4-ethylphenyl)pentaerithritol diphosphite, phenylbisphenol A pentaerithritol diphosphite, bis(nonylphenyl)pentaerithritol diphosphite, and dicyclohexylpentaerithritol diphosphite.

Further, other phosphite compounds can be used, which react with divalent phenols and which has a cyclic structure. Examples include 2,2'-methylenebis(4,6-di-tert-butylphenyl)(2,4-di-tert-butylphenyl) phosphite, 2,2'-methylenebis(4,6-di-tert-butylphenyl)(2-tert-butyl-4-methylphenyl)phosphite, 2,2'-methylenebis(4-methyl-6-tert-butylphenyl)(2-tert-butyl-4-metylphenyl)phosphite, and 2,2'-ethylidenebis(4-methyl-6-tert-butylphenyl)(2-tert-butyl-4-methylphenyl)phosphite.

Above all, particularly preferable is tris(2,4-di-tert-butylphenyl)phosphite. The phosphite ester based anticolorants may be used alone or in combination of two or more kinds. Alternatively, it may be used together with a phenol based antioxidant.

Examples of the UV absorbing agent include 2-(2'-hydroxy-5'-methylphenyl)benzotriazole, 2-(2'-hydroxy-3',5'-di-tert-amylphenyl)benzotriazole, 2-(2'-hydroxy-3',5'-bis(α,α'-dimethylbenzyl)phenylbenzotriazole, 2,2' methylenebis[4-(1,1,3,3-tetramethylbutyl)-6-(2H-benzotriazole-2-yl)phenol], and a benzotriazole based compound represented by a condensate with methyl-3-[3-tert-butyl-5-(2H-benzotriazole-2-yl)-4-hydroxyphenylpropionate-polyethylene glycol.

Further, examples of the UV absorbing agent include a hydroxyphenyltriazine based compound such as 2-(4,6-diphenyl-1,3,5-triazine-2-yl)-5-hexyloxyphenol, 2-(4,6-bis(2,4-dimethylphenyl)-1,3,5-triazine-2-yl)-5-hexyloxyphenol.

Further, examples of the UV absorbing agent include a cyclic imino ester based compound such as 2,2'-p-phenylenebis(3,1-benzoxazine-4-one), 2-2'-m-phenylenebis(3,1-benzoxazine-4-one), and 2,2'-p,p'-diphenylenebis(3,1-benzoxazine-4-one).

Examples of the light stabilizer include bis(2,2,6,6-tetramethyl-4-piperidyl)sebacate, bis(1,2,2,6,6-pentamethyl-4-piperidyl)sebacate, tetrakis (2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, poly{[6-(1,1,3,3-tetramethylbutyl)amino-1,3,5-triazine-2,4-diyl][(2,2,6,6-tetramethylpiperidyl)imino]hexamethylene[(2,2,6,6-tetramethylpiperidyl)imino]}, and a hyndered amine based light stabilizer represented by polymethylpropyl-3-oxy-[4-(2,2,6,6-tetramethyl)piperidinyl]siloxane or the like. Such a light stabilizer exhibits better performance in weather resistance in the use in combination with the aforementioned UV absorbing agent or, in some cases, with various antioxidants.

Examples of the lubricant include fatty acid esters, fatty acid amides, and fatty acid metal salts, and at least one type of lubricant selected from them is preferably added.

Examples of the fatty acid ester based lubricant includes butyl stearate, cetyl permirate, monoglyceride stearate, diglyceride stearate, triglyceride stearate, montan wax acid ester, wax ester, dicarboxylate ester, and complex ester. Examples of the fatty acid amide based lubricant include stearic acid amide and ethylenebis stearyl amide. Examples of the fatty acid metal salt based lubricant include calcium stearate, magnesium stearate, zinc stearate, aluminum stearate, and barium stearate.

More preferably, when the sheet A has a single layer structure, the sheet A includes 0.01 to 3 parts by mass of a lubricant with respect to 100 parts by mass of a transparent resin including a polycarbonate resin as a main component, and the sheet A includes 0.1 to 5 parts by mass of at least one type selected from an antioxidant and an anticolorant and 0.1 to 5 parts by mass of at least one type selected from a UV absorbing agent and a light stabilizer with respect to 100 parts by mass of a transparent resin including a polycarbonate resin as a main component. When the sheet A has a multilayer structure (a so-called three-layered sheet), skin layers or skin layers and a core layer (of the sheet A) more preferably include 0.01 to 3 parts by mass of a lubricant with respect to 100 parts by mass of a transparent resin including a polycarbonate resin as a main component, and include 0.1 to 5 parts by mass of at least one type selected from an antioxidant and an anticolorant and 0.1 to 5 parts by mass of at least one type selected from a UV absorbing agent and a light stabilizer with respect to 100 parts by mass of a transparent resin including a polycarbonate resin as a main component. Still more preferably, the addition amount of the lubricant to the sheet A in the single layer structure and in the multilayer structure is 0.05 to 1.5 parts by mass. The addition amount of lubricant less than 0.01 part by mass causes a problem of fusion bonding to a pressing plate during hot press where pressing is performed while heating. On the other hand, the addition amount of lubricant exceeding 3 pats by mass causes a problem of interlayer fusion bonding during hot press of a multilayered lamination in an electronic passport or a card. Less than 0.1 part by mass of at least one type selected from an antioxidant and an anticolorant causes a tendency of a trouble occurring due to thermal oxidation of the polycarbonate resin at a melt coextrusion process. This problem tends to cause another problem of heat discoloration. On the other hand, more than 5 parts by mass of at least one type selected from an antioxidant and an anticolorant tends to cause a problem of bleeding of these additives, for example. Less than 0.1 part by mass of at least one type selected from a UV absorbing agent and a light stabilizer has a poor effect, and tends to cause a problem of deterioration in a lightfastness property and accordingly discoloration. On the other hand, more than 5 parts by mass of at least one type selected from a UV absorbing agent and a light stabilizer tends to cause a problem of bleeding of these additives, for example, which is not preferable.

Further, at least one layer of core layers and skin layers of the multilayer sheet B preferably includes a lubricant as well as at least one type selected from an antioxidant and an anticolorant and at least one type selected from a UV absorbing agent and a light stabilizer. A desired amount of the at least one type selected from an antioxidant and an anticolorant and the at least one type selected from a UV absorbing agent and a light stabilizer may be included selectively as needed. In addition, a region for inclusion may be selected as needed. A multilayer sheet B including a lubricant as well as at least one type selected from an antioxidant and an anticolorant and at least one type selected from a UV absorbing agent and a light stabilizer may be used along with the aforementioned sheet A including a single layer structure or a multilayer structure (the aforementioned three-layered sheet) including a lubricant as well as at least one type selected from an antioxidant and an anticolorant and at least one type selected from a UV absorbing agent and a light stabilizer. Preferable amounts of the lubricant, the at least one type selected from an antioxidant and an anticolorant and the at least one type selected from a UV absorbing agent and a light stabilizer included in the multilayer sheet B are described later.

### [B] Structure of Multilayer Sheet B:

The multilayer sheet B of the present invention is configured as at least three-layered sheet including skin layers and a core layer, and is laminated by melt coextrusion for formation. Herein, the "three-layered sheet" herein refers to "at least three layers", and is not limited to a three-layered sheet. In other words, the description of "three-layered sheet" for the multilayer sheet B in the present embodiment is for convenience in explanation, and the "three-layered sheet" refers to a "sheet including at least three layers" and does not limit the sheet B to a sheet including "three layers". That is to say, as long as the sheet includes three or more layers, any sheet including five layers, seven layers or any larger odd-numbered layers is included in the scope of the multilayer sheet B of the present embodiment.

When the multilayer sheet B of the present embodiment is configured of the above-stated multilayer structure as well, it is necessary that the skin layers described later are disposed on outermost sides of the sheet having the multilayer structure on both the sides of the sheet in such a manner that the core layer is sandwiched between the skin layers. Incidentally, though there is no particular limitation on the thickness of the skin layers, it is more preferable that the skin layer is formed to have a thickness in the predetermined range described later.

Meanwhile, even in the case that the multilayer sheet B is configured of the aforementioned "larger odd-numbered layers", when the structure has a too large number of layers, a thickness of each of the skin layers and core layers becomes too small. In such a case, a problem of deterioration in thermal adhesiveness with the sheet A may occur. Therefore, the multilayer sheet B preferably includes five layers, more preferably three layers.

Here, the reason why the multilayer sheet B is configured of odd-numbered layers as described above is because a multilayer sheet of even-numbered layers results in the same configuration as that of a multilayer sheet of odd-numbered layers by necessity. For example, a multilayer sheet including four layers has a disposition of a skin layer (PETG)/a core layer (PC)/a core layer (PC)/a skin layer (PETG), which is, after all, the same configuration as that of a multilayer sheet of odd-numbered layers.

For example, as for a multilayer sheet including three layers as an example, the layers are disposed as in a skin layer (PETG)/a core layer (PC)/a skin layer (PETG) so that the two skin layers are on both the outermost sides (one side and the other side) with a core layer as one layer being disposed between the two skin layers in the multilayer sheet. As for a multilayer sheet including five layers as an example, the layers are disposed as in a skin layer (PETG)/a core layer (PC)/a skin layer (PETG)/a core layer (PC)/a skin layer (PETG) so that the two skin layers are on both the outermost sides (one side and the other side) and so that the skin layers and the core layers are disposed alternately. Such a multilayer sheet having a multilayer structure can secure sufficient thermal adhesiveness.

It is desirable that the entire thickness (total thickness) of the three-layered sheet (multilayer sheet B), be 100 to 300 µm. The entire thickness of the three-layered sheet (multilayer sheet B) less than 100 µm accordingly makes a PETG layer as a skin layer of the multilayer sheet B thin. As a result, thermal adhesiveness between the sheet A (including both of "a single layer sheet" and a so-called "three-layered sheet") laminated at the outermost layer and the multilayer sheet B cannot be secured during thermal fusion bonding (during hot press) in the multilayer sheet lamination procedure. On the other hand, the entire thickness of the three-layered sheet (multilayer sheet B) exceeding 300 µm leads to difficulty in use as an electronic passport when such a three-layered sheet with a thickness exceeding 300 µm is used to form a multilayer sheet for an electronic passport. Further, in the multilayer sheet B, it is desirable that the ratio of the thickness of the core layer to the entire thickness is 30% or greater and less than 85%. When the skin layers are too thin, thermal adhesiveness between the sheet A (including both of "a single layer sheet" and a so-called "three-layered sheet") laminated at the outermost layer and the multilayer sheet B cannot be secured during thermal fusion bonding in the multilayer sheet lamination procedure. On the other hand, when the skin layers are too thick, the thickness of the core layer described later inevitably becomes small, thus failing to secure an opacifying property when printing is performed over the multilayer sheet B. Moreover, when a colorant is not included in the skin layers, contrast cannot be secured when black marking is performed to a transparent laser-markable sheet at the outermost layer, thus failing to secure visibility and clarity of a marking section.

The aforementioned desired thickness of the entire three-layered sheet can realize not only local properties such as properties of the multilayer sheet B easily but also the properties of the multilayer laser-markable sheet (a multilayer sheet including the sheet A and the multilayer sheet B) of the present embodiment as a whole easily. Not only the total thickness of the three-layered sheet as a whole but also the ratio of the skin layers and the core layer making up the three-layered sheet to the three-layered sheet are set at the desired ratio as stated above, whereby effects of the present invention can be more exerted such as improvement of a contrast property in association with the entire thickness of the three-layered sheet in the desired ratio.

Herein, the adhesiveness and the opacifying property of the multilayer sheet and the contrast with a laser marking section (of the sheet A) become extremely important elements concerning the feasibility of the multilayer sheet, the productivity, the ability of responding to market needs and the like. Accordingly, a relationship among the total thickness of the three-layered sheet as a whole, and the thicknesses of the skin layers and the core layer is described later in detail.

Similarly to the sheet A, the description such as "multilayer sheet" or "sheet including the lamination of three layers" refers to the state after the lamination of a plurality of layers (or three sheets), which does not limit the lamination method therefor.

### [B-1] Skin layer in Multilayer Sheet B:

The skin layers in the multilayer sheet B are configured as both of the outermost layers disposed on the outsides of the three-layer sheet. That is, the skin layers are disposed so as to sandwich the core layer in the multilayer sheet B described later from both of the end face sides (outsides) of the core layer so as to play a role of surface layers (outermost layers) of the three-layer sheet.

The skin layers preferably have the same thickness. The multilayer sheet B including skin layers having different thickness causes variations in thermal adhesiveness between the sheet A and the multilayer sheet B during thermal fusion bonding in the multilayer sheet lamination procedure, which is not preferable. The multilayer sheet B including skin layers having different thickness further may cause "warpage" of the lamination after hot press sheet, which is not preferable. In addition, for example, in the case that the multilayer sheet B includes three layers of a skin layer (PETG)/a core layer (PC)/a skin layer (PETG) and that the thickness of the core layer is 30% or greater and less than 85%, then the skin layer is 15% or greater and less than 70% on both sides. When the skin layer is too thin, degradation in thermal adhesiveness will occur. On the other hand, when the skin layers are too thick, the core layer described later accordingly becomes thin. In this case, when a colorant is mixed in such a thin core layer only, resin containing the colorant may be put in only one extruder, and therefore labor for cleaning can be reduced half that in the case of mixing a colorant in the skin layers as well as the core layer in extreme cases. A too thin core layer, however, causes the lack of an opacifying property when partial printing or entire printing is performed on the multilayer sheet B. In the case of the multilayer sheet B where the skin layers are too thick and accordingly the core layer is too thin, when a colorant is mixed in the skin layers and the core layer, any problem concerning the opacifying property as stated above will occur. However, when the multilayer sheet B including a three-layered sheet using two types of resins is formed by melt coextrusion, two extruders are required, and so a resin including a colorant has to be put in these two extruders. Therefore, after the production of a sheet formed by two-types and three-layered melt coextrusion, cleaning-up of the two extruders requires a lot of labor for cleaning of the colorant adhered to the extruders, often leading to problems of productivity and cost. Therefore, it is desirable that the entire thickness (total thickness) of the three-layered sheet (multilayered sheet B) and the ratio of the thickness of the core layer to the entire thickness be formed within the desired ranges as stated above.

Such skin layers desirably are made of a thermoplastic polyester resin. Preferably, a substantially noncrystalline aromatic polyester-based resin composition described later prepared from a thermoplastic polyester-based resin composition, i.e., a copolymerized polyester resin (see [B-1-1]) is available for this purpose.

### [B-1-1] Copolymer polyester resin:

A copolymer polyester resin preferably used for the present embodiment is blended as a main component of a noncrystalline aromatic polyester based resin composition. As the copolymer polyester resin, for the skin layer, a copolymer polyester resin preferably is used, which is a polyester composed of a dicarboxylic acid unit having mainly a telephthalate unit and an ethylene glycol unit (I) (hereinafter called "ethylene glycol unit (I)"), and a glycol unit having mainly 1,4-cyclohexane dimethanol unit (II), and where a ratio of the ethylene glycol unit (I) to the 1, 4-cyclohexane dimethanol unit (II) ((I)/(II)) is 90 to 30/10 to 70 mol%. Further preferably, as the copolymer polyester resin, for the skin layer, a transparent copolymer polyester resin composition including a copolymer polyester resin as a main component is used, the copolymer polyester resin being a polyester composed of a dicarboxylic acid unit having mainly a telephthalate unit and an ethylene glycol unit (I) (hereinafter called "ethylene glycol unit (I)"), and a glycol unit having mainly 1,4-cyclohexane dimethanol unit (II), and where a ratio of the ethylene glycol unit (I) to the 1, 4-cyclohexane dimethanol unit (II) ((I)/(II)) is 90 to 30/10 to 70 mol%. The reason why the component amounts of the ethylene glycol and 1, 4-cyclohexane dimethanol contained in the copolymer polyester resin are prepared is because the resin obtained with a substitution amount of the ethylene glycol component less than 10 mol% in the copolymer polyester resin is not sufficiently noncrystalline to cause recrystallization to proceed in the cooling step after thermal fusion bonding, which degrades thermal adhesiveness. The resin obtained with above 70 mol% is not sufficiently noncrystalline to cause recrystallization to proceed in the cooling step after thermal fusion bonding, which degrades thermal adhesiveness. Therefore, the resin obtained by preparing the component amounts of the ethylene glycol and 1, 4-cycrohexane dimethanol as in the present embodiment can be a preferable resin because the resin can be sufficiently noncrystalline and excellent in thermal adhesiveness.

Herein, the description of "as a main component of a noncrystalline aromatic polyester based resin composition" means that more than 50 mass% of a copolymer polyester resin is included in the total mass of the aromatic polyester based resin composition. The description of "having mainly a telephthalate unit" means more than 50 mol% out of 100 mol% as the entire constitutional units of the copolymer polyester resin. Similarly, the description of "polyester composed of ··· a glycol unit having mainly 1,4-cyclohexane dimethanol unit (II), and where a ratio of the ethylene glycol unit (I) to the 1, 4-cyclohexane dimethanol unit (II) ((I)/(II)) is 90 to 30/10 to 70 mol%" means that more than 50 mass% of the copolymer polyester resin is included, which is polyester composed of a glycol unit having mainly 1,4-cyclohexane dimethanol unit (II), where a ratio of the ethylene glycol unit (I) to the 1, 4-cyclohexane dimethanol unit (II) ((I)/(II)) is 90 to 30/10 to 70 mol%.

Further, an example of this copolymer polyester resin includes a substantially noncrystalline aromatic polyester based resin (trade name of "PETG" produced by Eastman Chemical Company) where about 30 mol% of ethylene glycol component in polyethylene telephthalate is substituted by 1, 4-cycrohexane dimethanol is commercially available. Another example of the copolymer polyester resin includes "BELLPET E-02" produced by Bell Polyester Products, Inc. that is a polycondensate of terephthalic acid and ethylene glycol as well as neopentyl glycol.

### [B-2] Core Layer in Multilayer Sheet B

The core layer is configured as a so-called nucleus layer disposed at the center of the three-layered sheet. That is, the core layer is formed as the nucleus layer of the three-layered sheet in such a manner that it is sandwiched between two skin layers disposed on the outermost sides. As the thickness of the core layer, the ratio of the thickness of the core layer to the thickness of the entire sheet is preferably 30% or greater and less than 85%. It is preferably 40% or greater and less than 80%. The ratio of the thickness of the core layer of 85% or greater relatively makes the skin layers thinner because the total thickness of the multilayer sheet B is as thin as 100 to 300 µm, leading to a unpreferable factor of variations in thermal adhesiveness between the sheet A (including both of "single layer sheet" and a so-called "three-layered sheet") as the outermost layers and the multilayer sheet B during thermal fusion bonding in the multilayer sheet lamination procedure. On the other hand, the thickness ratio of the core layer less than 30% leads to a problem of failing to secure an opacifying property when printing is performed over the multilayer sheet B, and further leads to a problem of failing to secure contrast and secure visibility and clarity of a marking section when black marking is performed to the sheet A (including both of "single layer sheet" and a so-called "three-layered sheet") as the outermost layer, which is not preferable.

The core layer may be made of a thermoplastic polycarbonate resin, particularly a transparent thermoplastic polycarbonate resin. The thermoplastic polycarbonate resin used, but not limited, preferably has a melt volume rate of 4 to 20. A resin with a melt volume rate less than 4 is useful for the improvement of toughness of a sheet, but has poor forming workability and has difficulty in the practical use, which is not preferable. A resin with a melt volume rate more than 20 leads to poor toughness of a sheet obtained, and is not preferable.

### [B-2-1] Colorant of Resin such as Dye or Pigment

The multilayer sheet B is a colored multilayer sheet, where at least one layer of the skin layers and the core layer in the multilayer sheet B includes at least one type selected from dyes and pigments. The multilayer sheet B is different from the sheet A in this point. The multilayer sheet B includes a colorant for resin such as colorant dyes and pigments for better contrast during marking by irradiation with laser light after the lamination of the sheet A and the lamination sheet of the colored multilayer sheet B and for securing of an opacifying property when printing is performed over the multilayer sheet B. Further, it is preferable that at least one of the skin layers and the core layer of the multilayer sheet B includes 1 part by mass or greater of at least one type of a colorant of resin such as dyes and pigments with respect to 100 parts by mass of a copolymer polyester resin or 100 parts by mass of the thermoplastic polycarbonate resin. Such 1 part by mass or greater of at least one type of a colorant of resin such as dyes and pigments included can achieve much better contract and further can secure an opacifying property sufficiently.

Examples of the colorant of resin such as colorant dyes and pigments include a white pigment, a yellow pigment, a red pigment and a blue pigment. Examples of the white pigment include titanium oxide, barium oxide and zinc oxide. Examples of the yellow pigment include iron oxide and titan yellow. Examples of the red pigment include iron oxide. Examples of the blue pigment include cobalt blue ultramarine. Herein a colorant for light coloring or tint colors is preferable for better contrast.

More preferably, a colorant of resin such as a white-colored dye or pigment for emphasizing contrast is added.

### [B-3] Lubricant, Antioxidant and Anticolorant:

At least one of the core layer and the skin layers of the multilayer sheet B may include a lubricant as well as at least one type selected from an antioxidant and an anticolorant and at least one type selected from a UV absorbing agent and a light stabilizer. Further preferably, at least one of the core layer and the skin layers of the multilayer sheet B may include 0.01 to 3 parts by mass of a lubricant with respect to 100 parts by mass of the thermoplastic resin, 0.1 to 5 parts by mass of at least one type selected from an antioxidant and an anticolorant with respect to 100 parts by mass of the thermoplastic resin and 0.1 to 5 parts by mass of at least one type selected from a UV absorbing agent and a light stabilizer with respect to 100 parts by mass of the thermoplastic resin. The addition (blending) of at least one type of an antioxidant and an anticolorant is preferable because it effectively influences on the property deterioration and the hue stabilization due to decrease in the molecular weight during forming process. The addition (blending) of at least one type selected from a UV absorbing agent and a light stabilizer is preferable because it effectively suppresses a lightfastness property from deteriorating during the storage of a multilayer laser-markable sheet for an electronic passport and in the actual usage of an electronic passport as a final product. That is, this configuration allows a desired amount of the at least one type selected from an antioxidant and an anticolorant and the at least one type selected from a UV absorbing agent and a light stabilizer to be included selectively as needed. In addition, a region for inclusion may be selected as needed.

Note here that the lubricant and at least one type selected from an antioxidant and an anticolorant in the multilayer sheet B are the same as the lubricant and at least one type selected from an antioxidant and an anticolorant in the sheet A, and therefore refer to the description for those in the sheet A ([A-1-4] Lubricant, Antioxidant and Anticolorant:).

### [C] Structure of Sheet C:

As illustrated in Fig. 1, Fig. 2A and Fig. 2B, the sheet C of the present invention is used for a multilayer laser-markable sheet for an electronic passport of the present invention to be easily bound in an electronic passport. Therefore, there is no particular limitation on the shape, length and the like as long as it has a shape, a size and the like making it easy to bind the multilayer laser-markable sheet for an electronic passport, and they can suitably be selected as necessary.

However, it is desirable that the sheet C has a thickness of 50 to 500 µm. The thickness of the sheet C less than 50 µm causes insufficient strength of the machine-sewn portion, thus causing a concern that the multilayer sheet where personal information such as a personal image, letters, and numbers is laser-marked is torn off from the electronic passport. The thickness exceeding 500 µm makes the rigidity of the sheet C too large, causing a problem that the electronic passport opens by itself. Preferable thickness ranges from 100 to 300 µm. The thickness of the sheet C of 100 µm or greater makes it easy to install an IC-Chip and an Antenna in the sheet C. On the other hand, the thickness of the sheet C of 300 µm or less leads to the ease of forming thereof even under the restriction of passport specifications such as the entire thickness of the lamination restricted to about 800 µm. In the case of using it as a hinged sheet, such a sheet C can keep its flexibility securely.

Further, the sheet C preferably is configured as a sheet (1) including at least one type selected from thermoplastic polyester, thermoplastic polyamide and thermoplastic polyurethane, woven fabric or nonwoven fabric (2) including at least one type selected from thermoplastic polyester and thermoplastic polyamide, or a laminate sheet (3) including the woven fabric or nonwoven fabric (2) and a sheet including at least one type selected from a thermoplastic polyester resin, a thermoplastic polyamide and a thermoplastic polyurethane. This sheet C has a very important role to bind the aforementioned sheet A where information such as images and letters is written by laser marking, the sheet B where information such as images and letters is printed by printing or the like and further a so-called inlet sheet including a storage medium such as an IC chip storing various types of information, as well as a cover of a passport and other visa sheets integrally and firmly. To this end, the sheet C has to have thermal adhesiveness enabling the firm binding with the sheet B or a sheet D, appropriate flexibility and heat resistance during thermal fusion bonding. Additionally, when the sheet C is bound by a sewing machine with a cover or the like of (a passport), for example, the sheet C has to have excellent tear strength and tensile strength at the machine-sewn portion, light stability and thermal resistance at this machine-sewn portion and further resistance to repeated folding i.e., an excellent hinge property. Therefore, the aforementioned materials meeting these demands are preferably used for the sheet C.

More specifically, the sheet C preferably is a sheet (1) made of at least one type selected from thermoplastic polyester elastomer, thermoplastic polyamide elastomer and thermoplastic polyurethane elastomer especially excellent in flexibility, strength and particularly a hinge property among thermoplastic polyester resins, thermoplastic polyamide resins and thermoplastic polyurethane resins. The sheet C preferably is a sheet (2) made of at least one type selected from the aforementioned thermoplastic polyester elastomer, thermoplastic polyamide elastomer and thermoplastic polyurethane elastomer excellent in flexibility, strength and particularly a hinge property as a main component and made of at least one type selected from resin compositions mixed with various inorganic and organic fillers or other thermoplastic resins. Alternatively, the sheet C preferably is a laminate sheet made of woven fabric or nonwoven fabric including at least one type selected from the aforementioned thermoplastic polyester elastomer, thermoplastic polyamide elastomer and thermoplastic polyurethane elastomer excellent in flexibility, strength and particularly a hinge property as a main component and at least one type selected from resin compositions mixed with various inorganic and organic fillers or other thermoplastic resins.

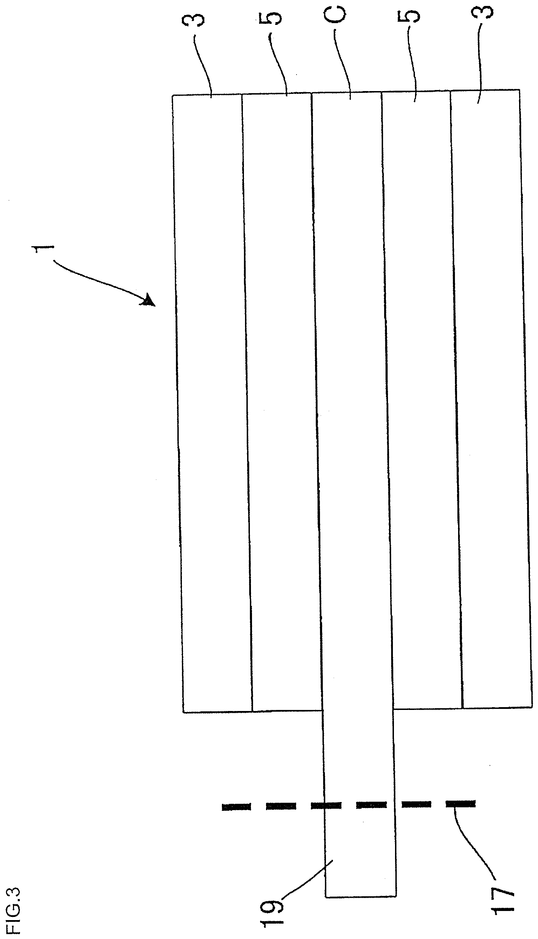

It is preferable that an end of the sheet C has a protruding portion partially protruding by 5 to 100 mm from the sheet A and the multilayer sheet B (see a protruding portion indicated with reference numeral 19 in Fig. 3). The protruding portion of the sheet C is formed for the ease of binding with an electronic passport. That is, the protruding portion extended longer than the sheet A and the multilayer sheet B at one end of the sheet C in the longitudinal direction allows the end of the sheet C to be incorporated with an electronic passport by machine sewing or bonding or by machine sewing and bonding.

The dimensions of the protruding portion are preferably 5 to 100 mm, more preferably 5 to 50 mm, and furthermore preferably 5 to 20 mm.

The thus formed protruding portion makes it easier (using this protruding portion) to incorporate with an electronic passport by machine sewing or bonding or by machine sewing and bonding.

The length of the protruding portion is preferably determined according to the workability of the machine sewing or bonding or machine sewing and bonding or workability of the machine sawing and bonding and the strength of the machine sewing portion and bonding strength.

When the sheet C is made of thermoplastic polyester resin, thermoplastic polyamide or thermoplastic polyurethane, a thermoplastic adhesive or a thermosetting adhesive may be applied on one surface or both surfaces other than the protruding portion as necessary. When the thermoplastic adhesive or the thermosetting adhesive is applied, it is preferable that the thermoplastic adhesive or the thermosetting adhesive has an application thickness of 0.1 to 20 µm. The thickness less than 0.1 µm does not produce sufficient bonding strength, which is not preferable. Whereas, the thickness exceeding 20 µm makes the total thickness too large, or leads to a problem such an adhesive extending off during hot press, which is not preferable.

When the sheet C is made of woven fabric, the diameter of fiber preferably ranges from 40 to 250 µm. The woven fabric may have fine texture or have openings (mesh openings) therein. In the case of having mesh openings, the diameter of fiber more preferably ranges from 60 to 300 µm. Forming at such desired dimensions facilitates not only the forming of a multilayer laser-markable sheet for an electronic passport of the present embodiment but also the manufacturing of an electronic passport using the present embodiment.

The provision of the protruding portion at the sheet C is preferable because it facilitates the forming of a five-layered lamination sheet including sheet A/multilayer sheet B/sheet C/multilayer sheet B/sheet A or a five-layered lamination sheet including sheet A/multilayer sheet B/inlet sheet E/multilayer sheet B/sheet A. Similarly, the provision of the protruding portion at the sheet C is preferable because it facilitates the forming of an electronic passport that is manufactured by attaching a seven-layered lamination sheet including sheet A/multilayer sheet B/sheet D/sheet C/sheet D/multilayer sheet B/sheet A with a cover or a back cover of an electronic passport by machine sewing or bonding or by machine sewing and bonding.

### [2] Relationship between sheet A and multilayer sheet B:

In the present embodiment, when the sheet A and the multilayer sheet B are laminated, the following configuration will be obtained. That is, the sheet A is configured as a PC (laser mark) transparent single-layer sheet or a transparent laser mark three-layered sheet including PC/PC (laser mark)/PC. On the opposite of the face of the sheet A irradiated with laser, the colored multilayer sheet B including PETG/PC (white based colorant blended)/PETG is laminated. In such a configuration, laser is applied to the upper layer thereof (sheet A) to turn PC making up the core layer in black, whereby contrast can be secured and exerting visibility and clarity of a marking section. Further, although printing of images and letters is performed typically on the sheet as the outermost layer, clarity of the printing portion cannot be held or the printing portion cannot be protected in many cases. In such a case, after printing at the outermost layer, when any friction or wear occurs at the outermost layer, the printing portion will be worn and the visibility thereof is degraded greatly. In the present embodiment, however, printing is performed on the surface of the multilayer sheet B as a layer below the sheet A, and therefore such a problem can be solved. Herein, the description of "the sheet A and the multilayer sheet B are laminated" refers to a state after the sheet A and the multilayer sheet B are laminated, which does not limit the lamination method therefor.

Note here that, in the above description, a multilayer laser-markable sheet in the present embodiment is described having a disposition pattern where the multilayer sheet B is disposed under the sheet A. However, the disposition is not limited to this. That is, it is not necessary to dispose the sheet A at an upper layer and the multilayer sheet B at a lower layer. For example, the sheet A may be disposed at a lower layer and the multilayer sheet B may be disposed at an upper layer. The reason why the sheet A (or multilayer sheet B) may be disposed at an upper layer or a lower layer is because the position (direction) where the laser-marked image or the like is observed by eyes is not limited to the vertical direction. In other wards, for example, when a multilayer laser markable sheet of the present embodiment is used in the form of a brochure such as a passport, even in case of disposing the sheet A at an upper layer and the multilayer sheet B at a lower layer in a plan view in the opened state, the disposition positions of the multilayer sheet A and the multilayer sheet B will become such that the multilayer sheet B is disposed at an upper layer and the sheet A is disposed at a lower layer in a plan view after the next page is opened. Therefore, the upper layer and the lower layer herein are used for convenience sake of description, and it means that the sheet A is disposed on the laser irradiation side. Such a disposition can achieve clarity of images or the like and high contrast in the sheet A and the multilayer sheet B after being laser-marked.

The multilayer laser markable sheet in the present embodiment includes not only the case of laminating sheet A/multilayer sheet B but also the case of, after performing various printing to the surface of the multilayer sheet B, laminating sheet A/(printed) multilayer sheet B/sheet made of a thermoplastic polyurethane resin/(printed) multilayer sheet B/sheet A. Further, it includes the case of laminating sheet A/multilayer sheet B/woven fabric or nonwoven fabric of polyester/multilayer sheet B/sheet A. It still further includes the case of, after thermal fusion bonding of a lamination sheet of the multilayer sheet B/sheet made of a thermoplastic polyurethane resin or the like or woven fabric or nonwoven fabric of polyester/multilayer sheet B and printing on the surface of this lamination sheet, laminating sheet A/the lamination sheet/sheet A. Flexible adaption according to the purpose for use and the method for use is possible, from which effects of the present invention can be obtained.

### [3] Method for Forming Sheet A and Multilayer Sheet B:

Examples of a method to obtain the sheet A and the colored multilayer sheet B in the present invention include a method of melt co-extruding a resin composition for each layer for forming and laminating the same, a method of forming each layer in a film shape and laminating the same, a method of melt co-extruding two layers for forming and laminating a film separately formed on the two layers. From the viewpoints of productivity and costs, lamination by melt coextrusion, which is then formed, is preferable.

More specifically, the resin composition of each layer is prepared or is formed into a pellet shape as necessary to be put in each hopper of a three-layer T die extruder where T dies are subjected to shared connection, followed by being melted at a temperature ranging from 200°C to 300°C for coextrusion forming. Thereafter, the resultant is cooled for solidification with a cooling roll or the like to form a three-layered lamination. Incidentally, the sheet A and the colored multilayer sheet B of the present invention can be formed by a known method without being limited to the aforementioned method. For example, they can be obtained in accordance with the description on Pages 6 and 7 of JP-A-10-71763.

The sheet A and the multilayer sheet B obtained as stated above are cut into predetermined dimensions, and thereafter are laminated and bonded by thermal fusion bonding in a desired time, at a desired pressure and a desired temperature, whereby a multilayer laser-markable sheet can be obtained. Herein, the lamination may be obtained, but not limited to, by producing the sheet A, the sheet B and the sheet C by melt coextrusion by a T-die method, which is then cut into a predetermined size, laminated as in sheet A/sheet B/sheet C/sheet B/sheet A and is processed by a vacuum press device.

Herein, the desired time, the desired pressure and the desired temperature are not limited especially, and the desired time, the desired pressure and the desired temperature are selected appropriately as needed. In a typical case, the desired time ranges from 10 seconds to 6 minutes, the desired pressure ranges from 1 to 20 MPa and the desired temperature ranges from 120 to 170°C as an example.

### [4] Lamination Sheet

The multilayer laser-markable sheet for an electronic passport of the present invention preferably is configured including the lamination of five sheets of sheet A/multilayer sheet B/sheet C/multilayer sheet B/sheet A. Alternatively, it is preferably configured including the lamination of five sheets of sheet A/multilayer sheet B/ inlet hinged sheet including sheet C/multilayer sheet B/sheet A. That is, it includes the lamination structure of sheet A/multilayer sheet B, whereby at least two-layered lamination structure including a transparent laser marking layer and a colored sheet (including white sheet) is obtained. Such a two-layered lamination structure can further improve a contrast ratio in laser marking as compared with the lamination including a transparent laser marking layer and a white layer, and can improve clarity of images or the like.

Herein, the five-layer lamination sheet as in the present embodiment can be manufactured by various methods. For instance, after laminating sheet A/multilayer sheet B/sheet C/multilayer sheet B/sheet A, the lamination is thermal fusion bonded (thermal lamination) by hot press, whereby a five-layered lamination sheet can be manufactured.

When printing is to be performed to the above-stated lamination sheet, after printing/curing of a photo-curable or thermosetting type ink may be performed to one side of the multilayer sheet B and sheet A/printed multilayer sheet B/sheet C/printed multilayer sheet B/sheet A may be laminated, and then thermal fusion bonding (thermal lamination) may be performed by hot press. As another manufacturing method, after the multilayer sheet B/sheet C/multilayer sheet B may be subjected to hot press for thermal fusion bonding and lamination and printing may be performed to a surface of the hot-pressed lamination, then sheet A/(the multilayer sheet B/sheet C/multilayer sheet B)/sheet A may be laminated in this order and hot pressed.

As still another manufacturing method, after printing/curing of a photo-curable or thermosetting type ink may be performed to one side of the multilayer sheet B and a varnish as a type of adhesive may be applied to the printed face and may be dried as needed, then the sheet A/varnish applied and printed multilayer sheet B/sheet C/varnish applied and printed multilayer sheet B/sheet A may be laminated in this order and hot-pressed.

Further, a thermoplastic or thermosetting adhesive of 0.1 to 20 µm in thickness may be applied beforehand to one face or both faces of each of the sheets in the five-layered lamination or a part of the sheet surfaces for manufacturing. When such a thermoplastic or thermosetting adhesive is applied, similarly to the above, sheet A/multilayer sheet B/sheet C/multilayer sheet B/sheet A may be laminated in this order, which may be then hot pressed for thermal fusion bonding (thermal lamination). When a room-temperature setting adhesive such as a moisture-curable adhesive is applied, sheet A/multilayer sheet B/sheet C/multilayer sheet B/sheet A may be laminated in this order, which may be then pressurized for bonding (dry lamination) for manufacturing.

When printing is performed to such a lamination sheet, more preferably, after printing/curing of a photo-curable or thermosetting type ink may be performed to one side of the multilayer sheet B, and sheet A/printed multilayer sheet B/sheet C/printed multilayer sheet B/sheet A may be laminated, and then thermal fusion bonding (thermal lamination) may be performed by hot press, whereby a multilayer laser-markable sheet for an electronic passport may be formed. Similarly, a multilayer laser-markable sheet for an electronic passport is formed more preferably by the following method. That is, after printing/curing of a photo-curable or thermosetting type ink may be performed to one side of the multilayer sheet B and a varnish as a type of adhesive may be applied to the printed face and may be dried as needed, and then the sheet A/varnish applied and printed multilayer sheet B/sheet C/varnish applied and printed multilayer sheet B/sheet A may be laminated in this order and hot-pressed. Such methods are preferable because they can improve the convenience such as the ease of forming.

However, the method is not limited to the above, and the aforementioned five-layer lamination may be formed within the range of not deviating from the constitution and the effects of the present invention.

The hot press temperature for thermal fusion bonding (thermal lamination), but varying with the types of the sheet C, ranges from 100 to 170°C and preferably from 130 to 160°C. The hot press temperature less than 100°C may cause an adhesion failure, and the hot press temperature exceeding 170°C may cause defects such as warpage or shrinkage of the five-layer lamination or extending off of a sheet, which is not preferable.

The multilayer laser-markable sheet for an electronic passport as described above may preferably include the lamination of five sheets including sheet A/multilayer sheet B/sheet C/multilayer sheet B/sheet A or the lamination of five sheets including sheet A/multilayer sheet B/inlet hinged sheet including sheet C/multilayer sheet B/sheet A. This configuration allows fixed information to be printed on one face (sheet A side) of the multilayer sheet B prior to the lamination of five sheets, and personal information to be laser marked in the sheet A. Accordingly, fixed information and personal information, which may be different or the same, can be printed or drawn by laser marking on both sides of a so-called "Data-Page". The lamination of five sheets including sheet A/multilayer sheet B/inlet hinged sheet including sheet C/multilayer sheet B/sheet A makes it easy to provide an IC chip and an antenna, and can be used as a multilayer sheet for a so-called IC-chip built-in type passport. Further, the inlet hinged sheet is configured as a composite sheet including sheet C and an inlet sheet provided with an IC-Chip and an antenna, whereby the thickness thereof can be reduced. As a result, the sheet A and the multilayer sheet B can be made thicker under the restriction of 800 µm for the entire thickness of the lamination. Further, the sheet A is made thicker, whereby printing density of laser marking can be increased, thus enabling clear marking of letters and images. The multilayer sheet B is made thicker, whereby an opacifying property of an antenna provided can be improved.

More specifically, the aforementioned inlet hinged sheet preferably includes a sheet F for an electronic passport and an IC chip and an antenna provided in the sheet F for an electronic passport, where the sheet F for an electronic passport preferably is formed as a thermal fusion bonded laminate sheet including woven fabric or nonwoven fabric including at least one type selected from a thermoplastic polyester resin and a thermoplastic polyurethane resin and at least one type selected from a thermoplastic polyester resin and a thermoplastic polyamide, and the thickness of the sheet F for an electronic passport preferably ranges from 50 to 500 µm. This configuration can make the inlet hinged sheet thin securely.

The aforementioned multilayer laser-markable sheet preferably uses an inlet sheet and includes the lamination of six sheets including sheet A/multilayer sheet B/inlet sheet/sheet C/multilayer sheet B/sheet A, too. This inlet sheet may include an antenna such as a copper wire and an IC-Chip embedded therein, and the inlet sheet and the hinged sheet may be integrated.

More specifically, the inlet sheet preferably includes a sheet G for an electronic passport and an IC chip and an antenna provided in the sheet G for an electronic passport, where the sheet G for an electronic passport preferably is formed in a sheet form made of at least one type selected from a thermoplastic polyester resin and a thermoplastic polyurethane resin, or the sheet G for an electronic passport preferably is formed in a sheet form made of a composite material including at least one selected from a thermoplastic polyester resin and a thermoplastic polyurethane resin and inorganic fillers, or a polymer alloy including at least one type selected from a thermoplastic polyester resin and a thermoplastic polyurethane resin and a resin at least one selected from an acrylic resin, an ABS resin and an amorphous polyester resin, and the thickness of the sheet G for an electronic passport preferably ranges from 50 to 400 µm. In this way, the mixture of at least one resin selected from a thermoplastic polyester resin, a thermoplastic polyurethane resin and a mixture thereof and at least one resin selected from an acrylic resin and an ABS resin enables a hinged sheet and an inlet sheet having a balance among the flexibility, the rigidity, the strength and the thermal resistance. Above all, such a mixture enables better balance among the flexibility, the rigidity, the strength and the thermal resistance than a thermoplastic polyester resin alone or a thermoplastic polyurethane resin alone.

Herein, the aforementioned IC-chip built-in type (so-called IC-chip model) multilayer sheet including an IC chip and an antenna provided therein may be manufactured as follows. (1) Firstly, each sheet of the sheet A and the multilayer sheet B is extrusion-formed in a sheet with a predetermined thickness (single layer, three layers) using a melt extruder by the aforementioned manufacturing method, and each sheet is cut into desired dimensions for manufacturing. (2) As for the inlet sheet E, using thermoplastic polyurethane elastomer or a composite article of thermoplastic polyurethane elastomer and inorganic filler, or a polymer alloy including thermoplastic polyurethane elastomer and one type of an amorphous copolymer polyester resin, an acrylic resin and an ABS resin, a sheet C is formed at a thickness of about 200 µm using a T die attached melt coextruder. Further, the sheet C is cut into desired dimensions to be a separated sheet, and then an IC chip and an antenna are provided on the sheet C, whereby an inlet sheet E can be obtained. Further, fixed information is printed on one face of the sheet B. Thereafter, sheet A/sheet B/inlet sheet E/sheet B/sheet A are laminated while being heated at 150°C, for example, to be a five-layered lamination. In this way, a lamination for an electronic passport with an IC chip and an antenna provided therein can be manufactured. The lamination is further bound to be a "blank passport" using electronic passport bookbinding machinery, and personal information on an applicant for the issuance of the passport is marked at the sheet A by laser marking. The manufacturing method, however, is not limited to this.

In the aforementioned case, the inlet sheet E preferably has a protruding portion at one end partially protruding by 5 to 100 mm, preferably by 5 to 20 mm, from the sheet A and the sheet B. The protruding portion of the inlet sheet E is formed for binding with a cover or a visa sheet of an electronic passport by machine sewing. Then, this machine-sewn portion serves as a hinged portion. Herein, an IC chip and an antenna are not provided at the protruding portion of the inlet sheet E.

On the other hand, an inlet sheet E provided with an IC chip and an antenna by the aforementioned method may be formed at a sheet different from the above sheet C, and thereafter sheet A/sheet B/sheet C/inlet sheet E/sheet B/sheet A may be laminated while being heated to be a six-layered lamination to manufacture a lamination for an electronic passport including the IC chip and the antenna provided therein. In this case, the sheet C may have a protruding portion at one end similarly to the above as a machine-sewn portion. Examples of the above "sheet different from" the sheet C include, but not limited to, a sheet including a thermoplastic polyurethane resin, a thermoplastic polyester resin, a polycarbonate resin, a styrene-based resin or a mixture of two or more types of them.

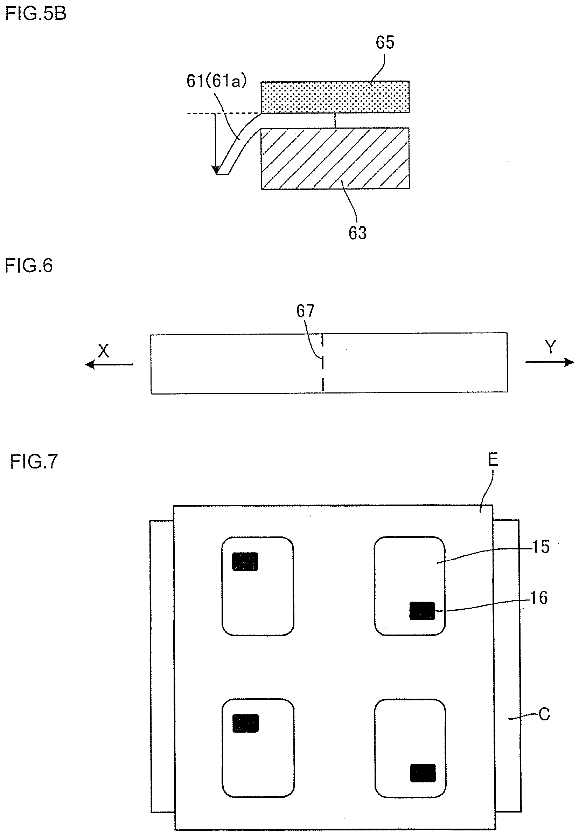

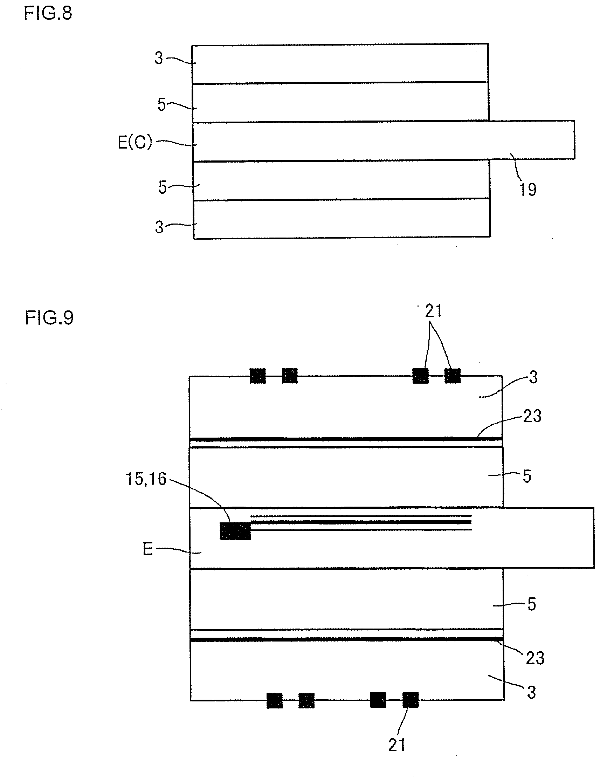

For instance, as illustrated in Fig. 7, an IC chip and an antenna may be provided at the inlet sheet E, and as in Fig. 8, a five-layered lamination including sheet A/multilayer sheet B/inlet sheet E/multilayer sheet B/sheet A may be illustrated. More specifically, as illustrated in Fig. 9, the sheet A includes a laser marking portion 21 where personal information is laser marked. Similarly, fixed information 23 is printed at the multilayer sheet B. Further, the inlet sheet E includes an IC chip and an antenna provided therein, and further includes a hinged portion provided with a protruding portion. Although in Fig. 7 the IC chip and the antenna are visible, they are actually not visible from the surface of the lamination.

The aforementioned multilayer laser-markable sheet for an electronic passport is preferably formed, after printing on the surface of the multilayer sheet B, as a five-layered lamination sheet including sheet A/multilayer sheet B/sheet C/multilayer sheet B/sheet A or as a five-layered lamination sheet including sheet A/multilayer sheet B/inlet sheet E/multilayer sheet B/sheet A. The thus formed multilayer laser-markable sheet for an electronic passport can achieve excellent laser markability, high contrast between the original surface color and the printed portions, and clear letters, symbols and images.

### [5] Matting:

It is preferable that at least one surface of at least one of the sheet A, the multilayer sheet B and the sheet C is subjected to matting with the average roughness (Ra) of 0.1 to 5 µm. The reason why the sheet surface(s) of the aforementioned respective sheets is(are) subjected to matting selectively as needed is because, for example, in the case of the hot press forming of the sheet A of the present embodiment/different multilayer sheet B, the matting allows the air between the sheet A of the present embodiment and the different multilayer sheet B to be easily come out. When the sheets without matting are conveyed to the lamination step, a trouble tends to occur. For instance, when these are sucked/vacuumed to be conveyed and then aligned and laminated, and thereafter when air is injected to detach the sheet, a problem of difficulty for detachment and misalignment in the lamination tends to occur even when the sheet can be detached. The average roughness (Ra) of matting exceeding 5µm tends to degrade thermal adhesiveness of the transparent multilayer laser-markable sheet of the present embodiment/different multilayered sheet. Sheet may be subjected to the matting selectively as needed, which is preferable because a multilayer laser-markable sheet for an electronic passport as a whole can be easily prepared.

The average roughness (Ra) of the surface less than 0.1µm leads to a tendency of causing a problem of sticking of the sheet to the conveying apparatus upon conveyance or lamination of the sheet as described above.

### [6] Electronic Passport:

An electronic passport is preferably formed by using the aforementioned multilayer laser-markable sheet for an electronic passport and by machine sewing or bonding or by machine sewing and bonding the protruding portion of the sheet C with a cover or a back cover of the electronic passport. For instance, an electronic passport is preferably formed by machine sewing or bonding or by machine sewing and bonding a protruding portion of the sheet C of a five-layered lamination sheet including the aforementioned sheet A/multilayer sheet B/sheet C/multilayer sheet B/sheet A or a five-layered lamination sheet including the aforementioned sheet A/ the aforementioned multilayer sheet B/inlet sheet E/ the aforementioned multilayer sheet B/ the aforementioned sheet A with a cover or a back cover of the electronic passport. Such configurations facilitate the forming of an electronic passport.

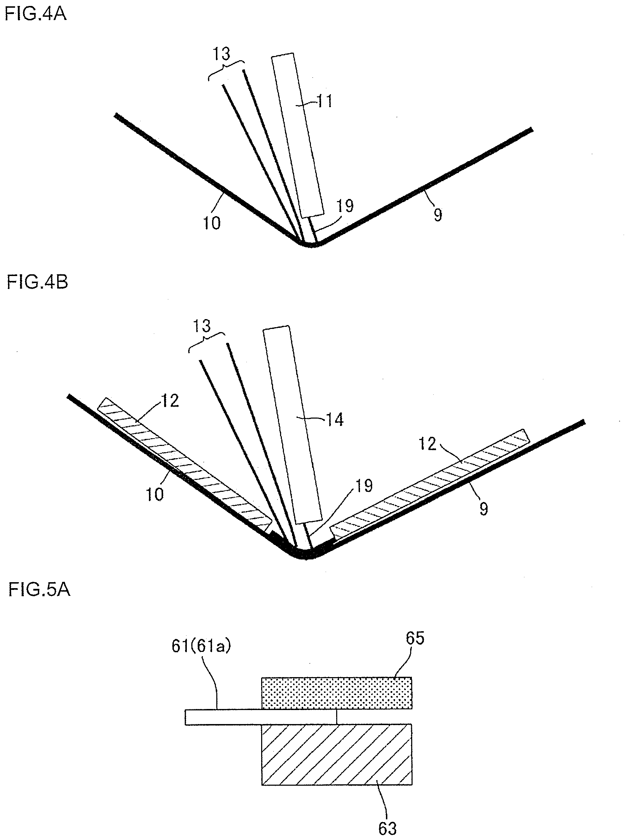

More specifically, a passport as illustrated in Fig. 4A and Fig. 4B are exemplified. For instance, as illustrated in Fig. 4A, in the case of an e-Card type passport, an IC chip (IC-CHIP) and an antenna (ANTENNA) are inserted in a lamination 11 as an inlet (Inlet), and such a lamination is bound between a cover 9 and a back cover 10 via a protruding portion 19 of a hinged part. On the e-Card as the lamination 11, personal information (face image and personal information) is written by laser marking on demand. That is, the personal information is written on demand on the IC chip and a plastic sheet (plastic-sheet) provided in the e-Card. Herein, reference numeral 13 in the drawing denotes a visa sheet. Alternatively, as illustrated in Fig. 4B, in the case of an e-Cover type passport, an IC chip and an antenna are provided in a plastic inlay 12 (Plastic-Inlay) attached to a cover 9 and a back cover 10, and additionally a lamination 14 called data page (Data-Page) made of a plastic sheet (Plastic-sheet) is bound via a protruding portion 19 of a hinged part. In the case of the e-Cover type, personal information will be written on the IC chip and the plastic sheet of the data page on demand.

### [7] Laser Marking:

A multilayer laser-markable sheet of the present embodiment produces a color by applying a laser beam thereto. Examples of the laser beam include a gas laser such as He-Ne laser, Ar laser, CO₂ laser, or excimer laser; a solid laser such as YAG laser or Nd·YVO₄ laser; semiconductor layer; and pigment laser. Among them, YAG laser and Nd·YVO₄ laser are preferable.

Incidentally, as described above, to the aforementioned resin composition may be added other additives such as a release agent, a stabilizer, an antioxidant, an ultraviolet absorber, and a reinforcing agent as needed.

In the laser-marking method of the present embodiment, the laser beam may be in a single mode or multi mode, and a laser beam having a narrow beam diameter such as 20 to 40 µm as well as a wide beam diameter of 80 to 100 µm may be used. A laser beam having a beam diameter of 20 to 40 µm in a single mode is preferable because contrast between a printing colored section and the base becomes three or more, thus leading to a printing quality with good contrast.

In this way, when laser beam is applied to the multilayer laser-markable sheet of the present embodiment, a sheet A making up the multilayer laser-markable sheet produces a color. Then, since this sheet A is made of a polycarbonate resin of high thermal resistance or includes a polycarbonate resin of high thermal resistance as a main component, high-power laser light can be applied thereto. As a result, images or the like can be drawn easily and more clearly. For instance, in the case where a much higher-power laser light is applied to a transparent sheet made of PC and including a single layer of a laser coloring layer (hereinafter called "PC laser coloring layer transparent single layer sheet" as needed), "foaming" occurs in the sheet, thus causing a "bulge" phenomenon at the surface of the sheet. Even under the same condition as the condition of applying high-power laser light, the sheet A including three layers of PC/PC (laser coloring layer)/PC and a PC transparent skin layer provided on the PC laser coloring layer can suppress the "bulge" phenomenon because of the effect of the PC transparent skin layer. Accordingly, in the present embodiment, images or the like can be drawn more clearly. The effect obtained from the provision of this PC transparent skin layer is not limited to this. In the case where a transparent sheet used is made of PC and includes a single layer of a laser coloring layer, a marking portion in the sheet is directly ground by external friction. On the other hand, in the present embodiment, although the PC transparent skin layer might be ground, the PC transparent skin layer can prevent the laser making portion from being ground by providing PC transparent skin layer. Therefore, the laser marking portion has more excellent wear resistance.

Further, since the sheet made of a polycarbonate resin has a high thermal resistance, a thermal fusion bonding of the multilayer lamination of the resin sheet has to be performed at a high temperature ranging from 200 to 230°C. A problem further arises in the productivity of the hot press step. Additionally, various printing is typically performed on an intermediate layer called an inlay layer in a plastic data sheet of an electronic passport. When printing is performed on the inlay layer, and then thermal fusion bonding is performed at a high temperature ranging from 200 to 230°C during the hot press step of the multilayer lamination, the printing often is "burned". Printed letters and images may change in color, which is therefore not preferable.

To cope with this problem, a coloring three-layered sheet of the present embodiment including PETG/PC (colored)/PETG is laminated on the PC laser coloring layer transparent single layer sheet as an overlay or on an inlay as a primary coat of the transparent three-layered sheet including PC/PC(laser coloring layer)/PC, whereby a temperature for thermal fusion bonding can be decreased. That is, since PETG has a glass-transition temperature at about 80°C, which is lower than a glass-transition temperature of a polycarbonate resin by about 60 to 70°C. Therefore, the lamination of the coloring three-layered sheet including PETG/PC (colored)/PETG results in the thermal fusion bonding at 150 to 170°C, whereby the temperature can be reduced by about 50 to 60°C. As a result, a change in color of the printed letters or images in the printed layer can be suppressed. Accordingly, the multilayer laser-markable sheet of the present embodiment has excellent laser markability. Especially, when laser light is applied to the surface layer or a core layer of the surface layer to generate a black color for marking of images and letters, clear letters and images of black/white contrast can be drawn because the base layer is white.

For instance, in the case of a five-layered lamination structure including sheet A/multilayer sheet B/sheet C/multilayer sheet B/sheet A, laser marking may be performed either from the surface or from the rear face. Further, laser marking may be performed from both faces.

More preferably, in a laser-marking method for the aforementioned multilayer laser-markable sheet, as illustrated in Fig. 2A and Fig. 2B, laser light is applied to the multilayer laser-markable sheet from the side of the sheet A for printing. In this way, desired laser light 7 is applied from a transparent laser marking (multilayer) sheet side of the present embodiment, whereby images or the like can be drawn easily and clearly. Therefore, the multilayer laser-markable sheet of the present embodiment has excellent laser markability and excellent thermal adhesiveness as well as excellent wear resistance at the marking portion.

### [8] Applications:

A multilayer laser-markable sheet of the present embodiment is for an electronic passport, or can be used preferably for an electronic passport.

For instance, when the multilayer laser-markable sheet is for an electronic passport, or is used in an electronic passport, two multilayer laser-markable sheets of the present embodiment are prepared. Then, between them, a sheet for making it easy to bind the multilayer laser-markable sheets is disposed such as a sheet including at least one type selected from thermoplastic polyester, thermoplastic polyamide and thermoplastic polyurethane, woven fabric or nonwoven fabric including at least one type selected from thermoplastic polyester and thermoplastic polyamide, or a laminate sheet including the woven fabric or nonwoven fabric and a sheet including at least one type selected from a thermoplastic polyester resin, thermoplastic polyamide and thermoplastic polyurethane. A machine-sewn binding portion is further provided as needed. Then, as illustrated in Fig. 4A and Fig. 4B, an electronic passport may be manufactured by disposing the cover 9, the lamination 11 according to the present embodiment, the visa sheet 13, an IC chip and the like. This is just an example, which does not limit the configuration thereto.

### Examples

Hereinafter the present invention will be described more specifically by way of Examples. However, the present invention is by no means limited to the Examples. Note here that "parts" in the following Examples and Comparative Examples represent parts by mass and mass% unless otherwise specified. Various evaluations and measurements in Examples were carried out by the following methods.

### [1] Transparency of Sheet A:

The whole beam transmittance of the sheet A was measured by a spectrophotometer (trade name of "EYE7000" produced by GretagMacbeth GmbH).
○: Good, whole beam transmittance of 80% or greater, Δ: Fair, whole beam transmittance of 60% or greater and less than 80%, × Bad, whole beam transmittance less than 60%.

### [2] Sheet conveyance property:

After cutting the sheet A and the sheet B in 100 × 300 mm, when they were conveyed by a sheet conveyer and were placed at a predetermined position of a die in a hot press machine, the sheet conveyance property was evaluated by the following criteria:
○: Good without problems;
Δ: When the sheet was vacuumed, conveyed and detached, a problem occurs because the sheet was difficult to be detached from a vacuum unit and misaligned; and
×: Very bad because it was hard to detach a sheet from a vacuum unit.

The sheet C was evaluated for the following [3-1] to [3-5].

### [3-5] Cut Sheet Workability:

For cut sheet workability, a cutting property during cutting into 110 × 300 mm by a die cut blade and workability after cutting and during the conveyance to a heat lamination step were evaluated by the following criteria.

### <<Judgment Criteria>>

○: Good for both of the cutting property and the workability, very good as a whole
Δ: Although the cutting property was good, the workability had a problem, fair as a whole
ΔΔ: The cutting property was fair and the workability had a problem worse than the above evaluation of Δ, slightly worse than fair
× Although the workability had no problem, the cutting property had a problem, bad as a whole
××: The cutting property and the workability had problems, very bad as a whole

### [3-2] Flexibility of Sheet:

A cut sheet of 10 mm in width × 100 mm in length was prepared. As illustrated in Fig. 5A, such a cut sheet was made to protrude from a base by 5 cm in length, and the degree of dropping of the cut sheet as a test sample was measured, which was evaluated by the following criteria for evaluation of flexibility of the sheet. More specifically, as illustrated in Fig. 5A, a cut sheet 61 was placed on a horizontal base 63, an upper portion of the cut sheet 61 was pressed by a supporting board 65, and then as illustrated in Fig. 5B, the degree of dropping of a protruding portion 61a of the cut sheet 61 was measured.

### <<Judgment Criteria>>

⊚: Excellent because "dropping" of the sheet was 2 cm or greater.
○: Good because "dropping" of the sheet was 1 cm to less than 2 cm.
Δ: A problem tends to occur because "dropping" of the sheet was 0.4 cm to less than 1 cm.
×: Very bad, because "dropping" of the sheet was less than 0.4 cm.

### [3-3] Strength at Machine-Sewn Portion

As illustrated in Fig. 6, a hinged sheet test sample of 20 × 100 mm was prepared, under which paper was spread, and perforation 67 was bored with a pitch of 5 mm. Then, after the paper was removed, tensile experiment was conducted in such a manner that the sample was stretched in the directions of arrow X and Y in Fig. 6 at an experiment rate of 300 mm/min. Then, the strength (N/cm) of the machine-sewn portion was measured and was evaluated by the following criteria.

### <<Judgment Criteria>>

⊚: Very excellent because the strength of the machine-sewn portion was 40 (N/cm) or greater, or a breakage occurred at a part other than the machine-sewn portion, and the strength thereof was 40 (N/cm) or greater.
○: Good because the strength of the machine-sewn portion was 20 (N/cm) or greater and less than 40 (N/cm).
Δ: A problem tends to occur because the strength of the machine-sewn portion was 10 (N/cm) or greater and less than 20 (N/cm).
ΔΔ: A problem was observed to some extent, and the strength of the machine-sewn portion was 10 (N/cm) or greater and less than 15 (N/cm).
×: Very bad, because the strength of the machine-sewn portion was less than 10 (N/cm).

### [3-4] Thermal Resistance:

Using a vacuum pressing machine (produced by Nissei Plastic Industrial Co., Ltd.), a laminated sheet including sheet A/sheet B/sheet C/sheet B/sheet A or including sheet A/sheet B/inlet sheet E/sheet B/sheet A was sandwiched between two chrome plating steel sheets and was preheated at a press temperature of 100°C for 2 minutes. Thereafter, it was held at a press temperature of 150°C and with an actual surface pressure of 25 kgf/cm² for 2 minutes. Further, after cooling to a room temperature, the sample sandwiched between the chrome plating steel sheets was taken out together with the chrome plating steel sheets. Then, appearance of the thus pressed lamination after the thermal fusion bonding test was visually evaluated at one end of the lamination where the sheet C or the inlet sheet E protruded by 10mm from the sheet A and the multilayer sheet B. In this way, thermal resistance of the protruding portion of the sheet C and the inlet sheet E during the thermal fusion bonding lamination step was evaluated.

### <<Judgment Criteria>>

⊚: Good because no shrinkage was observed.
○: Shrinkage in a level without problems was observed slightly.
Δ: Shrinkage was observed.
ΔΔ: Shrinkage was observed greatly, partially softened.
X: Bad because shrinkage was observed greatly or partially softened, and dropping was observed.
××: Very bad because softening and dropping were observed.

### [3-5] Thermal Adhesiveness at Hinged Part

The sheet A and the multilayer sheet B were cut into 100 × 300 mm. Next, the sheet C or the inlet sheet E (these two types of sheets are abbreviated as hinged sheets) was cut into 110 × 300 mm. Thereafter, a release agent was applied at one ends of the sheet A and the multilayer sheet B, and then five sheets including sheet A/multilayer sheet B/hinged sheet/multilayer sheet B/sheet A were sandwiched between two chrome plating steel sheets and was preheated using a rotary vacuum press machine (produced by Nissei Plastic Industrial Co., Ltd.) at a press temperature of 100°C for 2 minutes. Thereafter, it was pressurized at a press temperature of 150°C and with an actual surface pressure of 25 kgf/cm² for 2 minutes. Further, after cooling for 2 minutes, the lamination sheet was taken out, and was cut into a test sample of 20 mm in width including the release agent application portion, which was subjected to a peeling test at a test rate of 300 mm/min. In this way, thermal adhesiveness between the hinged sheet and the multilayer sheet B was evaluated by the following criteria. Herein, as the sheet A, (Manufacturing Example 1) sheet A[1] described later was used, and as the multilayer sheet B, (Manufacturing Example 11) multilayer sheet B[1] described later was used.

### <<Judgment Criteria>>

⊚: Very good because peeling strength was 50 N/cm or greater or material fracture of sheet was observed.
○: Good because peeling strength was 20 N/cm or greater and less than 50 N/cm.
Δ: A problem tends to occur because peeling strength was 10 N/cm or greater and less than 20 N/cm.
×: Bad because peeling strength was less than 10 N/cm.
××: Failed in thermal fusion bonding (easily peeled off by hands), failure in manufacturing.

The lamination was evaluated for the following [4-1] to [4-7].

### [4-1] Releasability after Lamination Hot Press Forming

Using a vacuum pressing machine (produced by Nissei Plastic Industrial Co., Ltd.), a laminated sheet was sandwiched between two chrome plating steel sheets and was preheated at a press temperature of 100°C for 2 minutes. Thereafter, it was held at a press temperature of 150°C and with an actual surface pressure of 25 kgf/cm² for 2 minutes. Further, after cooling for 2 minutes, the sample sandwiched between the chrome plating steel sheets was taken out together with the chrome plating steel sheets, and die releasability was evaluated as follows when the chrome plating steel sheets were peeled off from the sample.
○: Good because easy peeling, Δ: Unavailable because sample adhered slightly to the die, although peeling was possible, scratches occurred on the sheet surface, ×: Very bad because the sample adhered to the die.

### [4-2] Air Bubble Releasing Property:

As stated above, a state of air bubbles left in the lamination after hot press was observed, and the air bubble releasing property was evaluated as follows.
○: Good because no bubbles were observed in the lamination, Δ: Fair because bubbles slightly remained in the lamination, ×: Very bad because a lot of bubbles remained in the lamination.

### [4-3] Thermal Adhesiveness:

After a release agent was applied at one ends of the sheet A and the multilayer sheet B, five sheets including sheet A/multilayer sheet B/sheet C/multilayer sheet B/sheet A or five sheets including sheet A/multilayer sheet B/inlet sheet E/multilayer sheet B/sheet A were sandwiched between two chrome plating steel sheets and was preheated using a vacuum press machine (produced by Nissei Plastic Industrial Co., Ltd.) at a press temperature of 100°C for 2 minutes. Thereafter, it was held at a press temperature of 150°C and with an actual surface pressure of 25 kgf/cm² for 2 minutes. Further, after cooling for 2 minutes, the lamination sheet was taken out, and the sheets were peeled off from the release agent application portion by hands for evaluation of thermal adhesiveness between the laminated sheets as follows.
⊚: Very good because of no peeling and excellent thermal adhesiveness
○: Good because very limited part was peelable but sheet fracture occurred (good because material fracture occurred)
Δ: Fair because peelable by a relatively large force
×: Bad because peeling occurred entirely
××: Very bad because peeling occurred after hot press, or peeling occurred entirely by a very small force.

### [4-4] Evenness in Thickness of Lamination:

The total thickness of the lamination after thermal adhesiveness test was measured, and evenness in thickness of the lamination was evaluated by the following criteria.

### <<Judgment Criteria>>

○: Good because a decrease in total thickness was less than 3%.
Δ: A problem tends to occur because a decrease was from 3 to less than 6%.
×: Bad because a decrease in total thickness was 6% or greater.

### [4-5] Laser Markability:

Using the aforementioned heated lamination sheet, laser markability thereof was evaluated by Nd·YVO₄ laser (trade name of "LT-100SA" produced by Laser Technology Inc. and trade name of "RSM103D" produced by Rofin-Sinar technologies Inc.). More specifically, marking was performed at a laser irradiation rate of 400 mm/sec, and laser markability was determined based on the clarity of images and the surface state of a marking portion as follows.
⊚: Very good, excellent clarity without disorders such as bulge at a laser irradiation portion
○: Good, good clarity without disorders such as bulge at a laser irradiation portion
Δ: Fair, insufficient clarity or slight bulge occurred at the laser irradiation portion
×: Very bad, bad clarity and terrible bulge occurred at the laser irradiation portion

### [4-6] Contrast:

After printing on the multilayer sheet B, the processing for the aforementioned [4-3] Thermal Adhesiveness and [4-5] Laser Markability was carried out, and contrast of images or the like by laser marking and images or the like by printing were evaluated visually.
○: Good, clarity and visibility of images by laser marking and images by printing did not change.
Δ: Fair, clarity and visibility of images by laser marking and images by printing decreased.
×: Bad, clarity and visibility of images by laser marking and images by printing were degraded.

### [4-7] Wear Resistance of Lamination Sheet

The aforementioned transparent multilayer laser-markable sheet of [4-5] and a thermal fusion bonded lamination obtained by performing thermal fusion bonding of a transparent laser markable single layer sheet and a core sheet were irradiated with laser light in the aforementioned [4-5] to form a black laser marking portion. Further, the black laser marking portion was tested by a rubbing tester (produced by Imoto Machinery Co., Ltd.) using #00 steel wool (load 500gr) 50 times (reciprocate 25 times) and states before and after the test were judged visually for evaluation of wear resistance.
⊚: Very good without disorders at a marking portion, clarity and visibility of images did not change.
○: Although a marking portion was scraped, clarity and visibility of images were good.
Δ: A marking portion was scraped more, and clarity and visibility of images were degraded.
×: Bad, a marking portion was scraped greatly, and clarity and visibility of images were extremely degraded.

### (Manufacturing Example 1) Sheet A [1]

As a skin layer, polycarbonate (trade name of "TARFLON FN2500A" produced by Idemitsu Kosan Co., Ltd., with a melt volume rate = 8 cm³/10min.) was used, and as a core layer, 0.0015 part by mass of carbon black (#10 produced by Mitsubishi Chemical Corporation with an average particle diameter of 75 nm and a DBP oil absorption of 86 ml/100 g) as the energy absorber absorbing a laser beam was blended with the polycarbonate. Further 0.1 part of n-octadesyl-3-(3,5-di-t-butyl-4-hydroxyphenyl)propionate (trade name of "Irganox 1076" produced by Ciba Specialty Chemicals Inc.) as the phenol based antioxidant, and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a three-layered sheet A including skin layer/core layer/skin layer by T-die melt coextrusion. The sheet had a total thickness of 100 µm with the skin layers on the front and rear sides having the same thickness, and the layers had a configuration of the skin layer (18 µm)/the core layer (64 µm)/the skin layer (18 µm) so that the ratio of the thickness of the core layer was 64%. Further, both of the surfaces were subjected to matting to have an average surface roughness (Ra) of 0.5 to 1.8 µm to obtain a three-layered sheet A[1].

### (Manufacturing Example 2) Sheet A[2]

A sheet A[2] was obtained in a similar manner to Manufacturing Example 1 except that the sheet had a total thickness of 100 µm with the skin layers on the front and rear sides having the same thickness, and the layers had a configuration of the skin layer (28 µm)/the core layer (44 µm)/the skin layer (28 µm) so that the ratio of the thickness of the core layer was 44%.

### (Manufacturing Example 3) Sheet A[3]

A sheet A[3] was obtained in a similar manner to Manufacturing Example 1 except that the sheet had a total thickness of 100 µm with the skin layers on the front and rear sides having the same thickness, and the layers had a configuration of the skin layer (45 µm)/the core layer (10 µm)/the skin layer (45 µm) so that the ratio of the thickness of the core layer was 10%.

### (Manufacturing Example 4) single layer Sheet A[4]

Polycarbonate (trade name of "TARFLON FN2500A" produced by Idemitsu Kosan Co., Ltd., with a melt volume rate = 8 cm³/10min.) was used, and 0.0015 part by mass of carbon black (#10 produced by Mitsubishi Chemical Corporation with an average particle diameter of 75 nm and a DBP oil absorption of 86 ml/100 gr) as the energy absorber absorbing a laser beam was blended. Further 0.1 part of n-octadesyl-3-(3,5-di-t-butyl-4-hydroxyphenyl)propionate ("Irganox 1076" produced by Ciba Specialty Chemicals Inc.) as the phenol based antioxidant, and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a transparent laser-marking single layer sheet F of 100 µm in total thickness by T-die melt coextrusion. Further, a single layer sheet A[4] was obtained, both of which surfaces were subjected to matting to have an average surface roughness (Ra) of 0.5 to 1.8 µm.

### (Manufacturing Example 5) Sheet A[5]

As a skin layer, to 100 parts by mass of noncrystalline polyester (trade name of "Easter GN071" produced by Eastman Chemical Company, with EG/CHDM = 70/30 mol%) was blended 0.3 part by mass of calcium stearate as a lubricant. As a core layer, polycarbonate (trade name of "TARFLON FN2500A" produced by Idemitsu Kosan Co., Ltd., with a melt volume rate = 8 cm³/10min.) was used, and 0.0015 part by mass of carbon black (#10 produced by Mitsubishi Chemical Corporation with an average particle diameter of 75 nm and a DBP oil absorption of 86 ml/100 gr) as the energy absorber absorbing a laser beam was blended with the polycarbonate. Further 0.1 part of (n-octadesyl-3-(3,5-di-t-butyl-4-hydroxyphenyl)propionate ("Irganox 1076" produced by Ciba Specialty Chemicals Inc.) as the phenol based antioxidant and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a three-layered sheet A [6] including skin layer/core layer/skin layer by T-die melt coextrusion. The sheet had a total thickness of 100 µm with the skin layers on the front and rear sides having the same thickness, and the layers had a configuration of the skin layer (18 µm)/the core layer (64 µm)/the skin layer (18 µm) so that the ratio of the thickness of the core layer was 64%. Further, both of the surfaces were subjected to matting to have an average surface roughness (Ra) of 0.5 to 1.8 µm to obtain a three-layered sheet A[5].

### (Manufacturing Example 6) Multilayer Sheet B[1]

As a skin layer, noncrystalline polyester (trade name of "Easter GN071" produced by Eastman Chemical Company, with EG/CHDM = 70/30 mol%) was used, and as a core layer, polycarbonate (trade name of "TARFLON FN2500A" produced by Idemitsu Kosan Co., Ltd., with a melt volume rate = 8 cm³/10min.) was used, and 0.3 part by mass of calcium stearate as a lubricant was blended to the noncrystalline polyester. Further, to the polycarbonate were blended 0.1 part of (n-octadesyl-3-(3,5-di-t-butyl-4-hydroxyphenyl)propionate ("Irganox 1076" produced by Ciba Specialty Chemicals Inc.) as the phenol based antioxidant, 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber and 5 parts of titanium oxide to obtain a three-layered multilayer sheet B[1] including skin layer/core layer/skin layer by T-die melt coextrusion. The sheet had a total thickness of 250 µm with the skin layers on the front and rear sides having the same thickness, and the layers had a configuration of the skin layer (50 µm)/the core layer (150 µm)/the skin layer (50 µm) so that the ratio of the thickness of the core layer was 60%. Further, both of the surfaces were subjected to matting to have an average surface roughness (Ra) of 0.5 to 1.8 µm to obtain a multilayer sheet B[1].

### (Manufacturing Example 7) Multilayer Sheet B[2]

A multilayer sheet B[2] was obtained in a similar manner to Manufacturing Example 6 except that the sheet had a total thickness of 200 µm, and the layers had a configuration of the skin layer (12 µm)/the core layer (176 µm)/the skin layer (12 µm) so that the ratio of the thickness of the core layer was 88%.

### (Manufacturing Example 8) Multilayer Sheet B[3]

A multilayer sheet B[3] was obtained in a similar manner to Manufacturing Example 6 except that the sheet had a total thickness of 200 µm, and the layers had a configuration of the skin layer (80 µm)/the core layer (40 µm)/the skin layer (80 µm) so that the ratio of the thickness of the core layer was 20%.

### (Manufacturing Example 9) Multilayer Sheet B[4]

As a skin layer, polycarbonate (trade name of "TARFLON FN2500A" produced by Idemitsu Kosan Co., Ltd., with a melt volume rate = 8 cm³/10min.) was used, and as a core layer, 5 parts of titanium oxide was blended to the polycarbonate, and further 0.1 part of n-octadesyl-3-(3,5-di-t-butyl-4-hydroxyphenyl)propionate (trade name of "Irganox 1076" produced by Ciba Specialty Chemicals Inc.) as the phenol based antioxidant and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a three-layered multilayer sheet B[4] including skin layer/core layer/skin layer by T-die melt coextrusion. The sheet had a total thickness of 250 µm with the skin layers on the front and rear sides having the same thickness. The sheet had a total thickness of 200 µm and the layers had a configuration of the skin layer (40 µm)/the core layer (120 µm)/the skin layer (40 µm) so that the ratio of the thickness of the core layer was 60%. Further, both of the surfaces were subjected to matting to have an average surface roughness (Ra) of 0.5 to 1.8 µm to obtain a multilayer sheet B[4].

### (Manufacturing Example 10) Multilayer Sheet B[5]

A multilayer sheet B[5] was obtained in a similar manner to Manufacturing Example 6 except that the sheet had a total thickness of 200 µm, and the layers had a configuration of the skin layer (40 µm)/the core layer (120 µm)/the skin layer (40 µm) so that the ratio of the thickness of the core layer was 60%.

### (Manufacturing Example 11) Multilayer Sheet B[6]

A multilayer sheet B[6] was obtained in a similar manner to Manufacturing Example 6 except that the sheet had a total thickness of 150 µm, and the layers had a configuration of the skin layer (20 µm)/the core layer (110 µm)/the skin layer (20 µm) so that the ratio of the thickness of the core layer was 73%.

### (Manufacturing Example 12) Sheet D[1]

100 parts by mass of noncrystalline polyester (trade name of "Easter GN071" produced by Eastman Chemical Company, with EG/CHDM = 70/30 mol%) was blended with 0.3 part by mass of calcium stearate as a lubricant to obtain a sheet D[1] having the thickness of 50 µm by T-die melt coextrusion. Both of the surfaces were subjected to matting to have an average surface roughness (Ra) of 0.5 to 1.8 µm.

For the sheet C, the following three types of materials were used for forming.
[1] Sheet C: thermoplastic urethane elastomer sheet (trade name of "Higress DUS451" produced by Sheedom Co., Ltd.) thickness 200 µm, matting performed to both faces
[2] Sheet C: thermoplastic polyester elastomer sheet (trade name of "Materi DHS4057" produced by Sheedom Co., Ltd.) thickness 200 µm, matting performed to both faces
[3] Sheet C: Polyester woven cloth (trade name of "TNO-150HD" produced by Nippon Tokusyu Fabric Co., Ltd.), fiber diameter 71 µm, mesh openings 98µm, thickness 122 µm

### Inlet Sheets E[1] to [5]

As the inlet sheet E, the following five types of sheets were used for forming.

### (Manufacturing Example 13) Inlet Sheet E[1]

Non-yellowing type thermoplastic polyurethane elastomer (trade name of "Miractran XN-2004" produced by Nippon Miractran Co., Ltd.) was used to form a sheet F[1] of 200 µm in thickness by a T die melt extruder at an injection temperature of 200°C. Thereafter, an IC-chip and an antenna produced by Infineon Technologies AG were used to form an inlet sheet E(1).

### (Manufacturing Example 14) Inlet Sheet E[2]

Non-yellowing type thermoplastic polyurethane elastomer (trade name of "Miractran XN-2004" produced by Nippon Miractran Co., Ltd.) was used, and 10 mass% of mica (trade name of "Pelletized Mica Powder MICALET 21PU" produced by Yamaguchi Mica Co., Ltd.,) was blended therewith. Thereafter, melt coextrusion for pelletizing was performed at an injection temperature of 200°C using a strand die attached extruder to obtain mica composite TPU pellets. The resultant was formed as a sheet F[2] of 200 µm in thickness by a T die extruder at an injection temperature of 200°C similarly to the above [1]. Thereafter an IC-chip and an antenna produced by Infineon Technologies AG were used to form an inlet sheet E(2).

### (Manufacturing Example 15) Inlet Sheet E[3]

Non-yellowing type thermoplastic polyurethane elastomer (trade name of "Miractran XN-2004" produced by Nippon Miractran Co., Ltd.) was used, and 10 mass% of acrylic resin (trade name of "PARAPET GF" produced by Kuraray Co., Ltd.,) was blended therewith. Thereafter, melt coextrusion for pelletizing was performed at an injection temperature of 230°C using a strand die attached extruder to obtain TPU/acrylic polymer alloy pellets. The resultant was formed as a sheet F[3] of 200 µm in thickness by a T die melt extruder at an injection temperature of 230°C similarly to the above [1]. Thereafter an IC-chip and an antenna produced by Infineon Technologies AG were used to form an inlet sheet E(3).

### (Manufacturing Example 16) Inlet Sheet E[4]

Non-yellowing type thermoplastic polyurethane elastomer (trade name of "Miractran XN-2004" produced by Nippon Miractran Co., Ltd.) was used, and 10 mass% of noncrystalline copolymer polyester resin (trade name of "BELLPET E-02" produced by Bell Polyester Products, Inc.) was blended therewith. Thereafter, melt coextrusion for pelletizing was performed at an injection temperature of 220°C using a strand die attached extruder to obtain TPU/noncrystalline polyester polymer alloy pellets. The resultant was formed as a sheet F[4] of 200 µm in thickness by a T die melt extruder at an injection temperature of 220°C similarly to the above [1]. Thereafter an IC-chip and an antenna produced by Infineon Technologies AG were used to form an inlet sheet E(4).

### (Manufacturing Example 17) Inlet Sheet E[5]

Non-yellowing type thermoplastic polyurethane elastomer (trade name of "Miractran XN-2004" produced by Nippon Miractran Co., Ltd.) and polyester woven fabric (trade name of "TNO-80-48" produced by Nippon Tokusyu Fabric Co., Ltd.) with the fiber diameter of 48 µm, the mesh openings of 270 µm and the thickness of 78 µm were used, and the Miractran XN-2004 was melt co-extruded in a sheet form at an injection temperature of 220°C using a T die attached melt extruder. Immediately after that, the resultant as well as the polyester woven fabric were introduced between two rolls and then was turned over. Then, the polyester woven fabric on the opposite side (the side where Miractran XN-2004 was not introduced) was introduced again between two rollers as well as Miractran XN-2004 in a melt sheet form immediately after passing through the exit of the T die attached melt extruder. This allowed Miractran XN-2004 to melt and enter into the polyester woven fabric, so that a sheet F[5] of 200 µm in thickness was formed where all of the openings of the polyester woven fabric were filled with Miractran XN-2004 and TPU and polyester woven fabric were compositely integrated. Thereafter an IC-chip and an antenna produced by Infineon Technologies AG were used to form an inlet sheet E(5).

Using the aforementioned Manufacturing Examples 1 to 17, various evaluations were conducted as Examples 1 to 11 and Comparative Examples 1 to 5 in the configurations illustrated in Table 1 to Table 3.

**[Table 1]**

| | Example 1 | Example 2 | Example 3 | Example 4 | Example 5 | Example 6 |
|---|---|---|---|---|---|---|
| Sheet A | A [1] | A [1] | A [1] | A [1] | A [2] | A [4] |
| Multilayer Sheet B | B [5] | B [5] | B [1] | B [5] | B [5] | B [5] |
| Sheet D | - | - | - | D [1] | - | - |
| Sheet C | C [1] | C [2] | C [3] | C [3] | C [1] | C [1] |
| Inlet Sheet E | - | - | - | D [1] | - | - |
| Lamination Structure | A1/B5/C1/B5/A1 | A1/B5/C2/B5/A1 | A1/B1/C3/B1/A1 | A1/B5/D1/C3/D1/B5/A1 | A2/B5/C1/B5/A2 | A4/B5/C1/B5/A4 |
| Transparency | ⊚ | ⊚ | ⊚ | ⊚ | ⊚ | ⊚ |
| Conveyance Property | ○ | ○ | ○ | ○ | ○ | ○ |
| Cut Sheet Workability | Δ | Δ | ΔΔ | ΔΔ | Δ | Δ |
| Sheet Flexibility | ⊚ | ⊚ | ○ | ○ | ⊚ | ⊚ |
| Strength at Machine-sewn Portion | ○ | ○ | ○ | ⊚ | ○ | ○ |
| Thermal resistance | ○ | ○ to Δ | ⊚ | ⊚ | ○ | ○ |
| Thermal Adhesiveness of Hinged Part | ○ | ○ | ⊚ | ⊚ | ○ | ○ |
| Releasability | ○ | ○ | ○ | ○ | ○ | ○ |
| Air Bubble Releasing Property | ○ | ○ | ○ | ○ | ○ | ○ |
| Thermal Adhesiveness | ⊚ | ⊚ | ⊚ | ⊚ | ⊚ | ⊚ |
| Evenness in Thickness of Lamination | ○ | ○ | Δ | Δ | ○ | ○ |
| Laser Markability | ⊚ | ⊚ | ⊚ | ⊚ | ○ | ○ |
| Contrast | ○ | ○ | ○ | ○ | ○ | ○ |
| Wear Resistance | ⊚ | ⊚ | ⊚ | ⊚ | ○ | ○ |

**[Table 2]**

| | Example 7 | Example 8 | Example 9 | Example 10 | Example 11 |
|---|---|---|---|---|---|
| Sheet A | A [4] | A [4] | A [4] | A [4] | A [4] |
| Multilayer Sheet B | B [6] | B [6] | B [6] | B [6] | B [6] |
| Sheet D | - | - | - | - | - |
| Sheet C | - | - | - | - | - |
| Inlet Sheet E | E [1] | E [2] | E [3] | E [4] | E [5] |
| Lamination Structure | A4/B6/E1/B6/A4 | A4/B6/E2/B6/A4 | A4/B6/E3/B6/A4 | A4/B6/E4/B6/A4 | A4/B6/E5/B6/A4 |
| Transparency | ○ | ○ | ⊚ | ⊚ | ⊚ |
| Conveyance Property | ○ | ○ | ○ | ○ | ○ |
| Cut Sheet Workability | Δ | ○ | ○ | ○ | ○ |
| Sheet Flexibility | ⊚ | ○ | ○ | ○ | ⊚ |
| Strength at Machine-sewn Portion | ○ | ○ | ○ | ○ | ○ |
| Thermal resistance | ○ | ⊚ to ○ | ⊚ to ○ | ○ | ⊚ |
| Thermal Adhesiveness of Hinged Part | ○ | ○ | ○ | ○ | ○ |
| Releasability | ○ | ○ | ○ | ○ | ○ |
| Air Bubble Releasing Property | ○ | ○ | ○ | ○ | ○ |
| Thermal Adhesiveness | ⊚ | ○ | ⊚ | ⊚ | ⊚ |
| Evenness in Thickness of Lamination | ○ | ○ | ○ | ○ | ○ |
| Laser Markability | ⊚ | ⊚ | ⊚ | ⊚ | ⊚ |
| Contrast | ○ | ○ | ○ | ○ | ○ |
| Wear Resistance | ⊚ | ⊚ | ⊚ | ⊚ | ⊚ |

**[Table 3]**

| | Comparative Example 1 | Comparative Example 2 | Comparative Example 3 | Comparative Example 4 | Comparative Example 5 |
|---|---|---|---|---|---|
| Sheet A | A [3] | A [5] | A [1] | A [1] | A [1] |
| Multilayer Sheet B | B [5] | B [5] | B [2] | B [3] | B [4] |
| Sheet D | - | - | - | - | - |
| Sheet C | C [1] | C [1] | C [1] | C [1] | C [1] |
| Lamination Structure | A3/B5/C1/B5/A3 | A5/B5/C1/B5/A5 | A1/B2/C1/B2/A1 | A1/B3/C1/B3/A1 | A1/B4/C1/B4/A1 |
| Transparency | ⊚ | ⊚ | ⊚ | ⊚ | ⊚ |
| Conveyance Property | ○ | ○ | ○ | ○ | ○ |
| Releasability | ○ | ○ | ○ | ○ | ○ |
| Air Bubble Releasing Property | ○ | ○ | ○ | ○ | ○ |
| Thermal Adhesiveness | ⊚ | ⊚ | Δ | ⊚ | × × |
| Laser Markability | × | Δ | ○ | ○ | - |
| Contrast | × | Δ | Δ | × | - |
| Wear Resistance | ○ | Δ | ⊚ | ⊚ | - |

### (Consideration)

As illustrated in Table 1 and Table 2, Examples 1 to 6 each had excellent transparency and conveyance property of a sheet A. Further, they had excellent cutting workability, flexibility and strength at a machine sewn portion of a sheet making up a hinged part. Further, less shrinkage occurred at their protruding portions of the hinge parts obtained by heat lamination, and they had a good machine-sewing property with a cover or the like of an electronic passport. Moreover, they had excellent releasability after hot lamination pressing, air bubble releasing property and evenness in thickness of the lamination as well as excellent laser markability and wear resistance at a making portion.

Herein, Example 4 had wear resistance slightly inferior to those of Examples 1 to 3. However, Examples demonstrated that the present invention had no problems for usage when a product is used in an environment such as hard usage, i.e., unless a product is used in a field strictly requiring to have a higher quality and durability of laser markability.

Further, Examples 7 to 11 as the lamination including an IC-Chip and an Antenna provided therein each had excellent transparency and conveyance property of a sheet A. Further, they had excellent cutting workability, flexibility and strength at a machine sewn portion of a sheet making up a hinged part. Further, less shrinkage occurred at their protruding portions of the hinge parts obtained by heat lamination, and they had a good machine-sewing property with a cover or the like of an electronic passport. Moreover, they had excellent releasability after hot lamination pressing, air bubble releasing property and evenness in thickness of the lamination as well as excellent laser markability and wear resistance at a making portion.

On the other hand, since Comparative Example 1 had a ratio of the thickness of the core layer in the sheet A[3] of 10%, it had poor laser markability and contrast. Since Comparative Example 2 used the aforementioned noncrystalline polyester as the skin layers and polycarbonate as the core layer as base materials, it had insufficient clarity or not only slight bulge was observed at the laser light irradiation portion but also further scraping was observed at a marking portion, so that clarity and visibility of images were degraded, which was poorer in appearance than Examples. Since Comparative Example 3 had a ratio of the thickness of the core layer in the multilayer sheet B[2] of 88%, it had a problem of thermal adhesiveness and poor contrast. Since Comparative Example 4 had a ratio of the thickness of the core layer in the multilayer sheet B[3] of 20%, it failed to secure contrast. Since Comparative Example 5 used polycarbonate as the skin layers and the polycarbonate containing titanium oxide as the core layer of the multilayer sheet B[4], peeling occurred entirely by a small force, and it had difficulty in actual use. Since Comparative Example 5 had difficulty in actual use because peeling occurred entirely, other experiments were not carried out therefor.

### Industrial Applicability

A sheet A and a colored multilayer laser-markable sheet B of the present invention are non-PVC based multilayer sheet. Three sheets of sheet A/multilayer sheet B/sheet C as a basic constitutional unit can achieve excellent laser markability by laser light irradiation not only for letters and numerals but also for images. During lamination and hot process steps of the multilayer sheet also, the multilayer sheet shows excellent sheet conveyance property, lamination property and thermal adhesiveness, and is free from the deformation and "warpage" of the lamination sheet, so that the multilayer sheet has excellent thermal resistance. Further, when binding such multilayer laser-markable sheets in an electronic passport also, such binding can be performed by a simple method such as machine-sewing, and since such sheets are very effective for anti-counterfeit because of laser marking, the sheets can be preferably used for an electronic passport.

### Description of Reference Numerals

1: Multilayer laser-markable sheet, 3: Sheet A, 3a: Skin layer (of Sheet A), 3b: Core layer (of Sheet A), 5: Multilayer sheet B, 5a: Skin layer (of Multilayer sheet B), 5b: Core layer (of Multilayer sheet B), 7: laser light beam, 9: Cover, 10: Back cover, 11: Lamination, 12: Plastic Inlay, 13: Visa sheet, 14: Lamination, 15: IC chip, 16: Antenna, 17: Machine-sewn binding portion, 19: Protruding portion, 21: Laser marking portion, 23: (Printed) fixed information, C: Sheet C, E: Inlet sheet

## Claims

1. A multilayer laser-markable sheet for an electronic passport comprising three sheets of a sheet A/a multilayer sheet B/a sheet C as a basic constitutional unit, wherein
the sheet A comprises a transparent polycarbonate resin composition including a thermoplastic polycarbonate resin and a laser light energy absorbing agent, the sheet A having an entire thickness of 50 to 200 µm;
the multilayer sheet B comprises a colored multilayer sheet including skin layers and a core layer, the skin layers at both outermost layers including a thermoplastic polyester resin,
the core layer of the multilayer sheet B including a transparent thermoplastic resin including a thermoplastic polycarbonate resin,
at least one layer of the skin layers and the core layer of the multilayer sheet B including at least one type selected from a dye and a pigment, and
the multilayer sheet B having an entire thickness of 100 to 300 µm, and the core layer having a ratio of thickness thereof to the entire thickness of 30% or greater and less than 85%; and
the sheet C comprises a sheet including at least one type selected from a thermoplastic polyester resin, a thermoplastic polyamide resin and a thermoplastic polyurethane resin, woven fabric or nonwoven fabric including at least one type selected from a thermoplastic polyester resin and a thermoplastic polyamide resin, or a laminate sheet including the woven fabric or the nonwoven fabric and a sheet including at least one type selected from a thermoplastic polyester resin, a thermoplastic polyamide resin and a thermoplastic polyurethane resin, the sheet C having a thickness of 50 to 500 µm,
**characterized in that**
(i) the sheet A includes a single layer sheet,
or
(ii) the sheet A is a multilayer sheet including five layers or preferably three layers, wherein said three layers are disposed as in a skin layer /a core layer /a skin layer so that the two skin layers are on both of the outermost sides with a core layer as one layer being disposed between the two skin layers, and where said five layers are formed by disposing alternately skin layers and core layers as in a skin layer /a core layer /a skin layer /a core layer /a skin layer so that the two skin layers are on both of the outermost sides, wherein
said skin layers include a thermoplastic polycarbonate resin,
said core layer includes a transparent polycarbonate resin composition including a thermoplastic polycarbonate resin and a laser light energy absorbing agent,
the sheet A has an entire thickness of 50 to 200 µm, and has a ratio of thickness of the core layer to the entire thickness of the sheet A of 20% or greater and less than 90%.

2. The multilayer laser-markable sheet for an electronic passport according to claim 1, wherein one end of the sheet C has a protruding portion partially protruding by 5 to 100 mm from the sheet A and the multilayer sheet B.

3. The multilayer laser-markable sheet for an electronic passport according to claim 1 or 2, including
lamination of five sheets including the sheet A/the multilayer sheet B/the sheet C/the multilayer sheet B/the sheet A or
lamination of five sheets of the sheet A/the multilayer sheet B/an inlet hinged sheet including the sheet C/the multilayer sheet B/the sheet A.

4. The multilayer laser-markable sheet for an electronic passport according to claim 3, wherein the inlet hinged sheet includes a sheet F for an electronic passport, and an IC chip and an antenna provided in the sheet F for an electronic passport,
the sheet F for an electronic passport includes a thermal fusion bonded laminate sheet including woven fabric or nonwoven fabric including at least one type selected from a thermoplastic polyester resin and a thermoplastic polyurethane resin and at least one type selected from a thermoplastic polyester resin and thermoplastic polyamide, the sheet F for an electronic passport having a thickness of 50 to 500 µm.

5. The multilayer laser-markable sheet for an electronic passport according to claim 1 or 2 comprising, using an inlet sheet, lamination of six sheets including the sheet A/the multilayer sheet B/the inlet sheet/the sheet C/the multilayer sheet B/the sheet A.

6. The multilayer laser-markable sheet for an electronic passport according to claim 5, wherein the inlet sheet includes a sheet G for an electronic passport, and an IC chip and an antenna provided in the sheet G for an electronic passport,
the sheet G for an electronic passport includes a sheet form including at least one type selected from a thermoplastic polyester resin and a thermoplastic polyurethane resin, or the sheet G for an electronic passport includes a sheet form including a composite material including at least one selected from a thermoplastic polyester resin and a thermoplastic polyurethane resin and inorganic fillers, or a polymer alloy including at least one type selected from a thermoplastic polyester resin and a thermoplastic polyurethane resin and a resin at least one type selected from an acrylic resin, an ABS resin and an amorphous polyester resin, and
the sheet G for an electronic passport has a thickness of 50 to 400 µm.

7. The multilayer laser-markable sheet for an electronic passport according to any one of claims 1 to 6, wherein at least one surface of at least one of the sheet A, the multilayer sheet B and the sheet C is subjected to matting with an average roughness (Ra) of 0.1 to 5 µm.

8. An electronic passport comprising: the multilayer laser-markable sheet for an electronic passport according to any one of claims 2 to 7, the protruding portion of the sheet C being machine-sewn bound or bonded, or being machine-sewn bound and bonded with a cover or a back cover of the electronic passport.

9. A laser marking method for laser-marking to the multilayer laser-markable sheet for an electronic passport according to any one of claims 1 to 7 or the electronic passport according to claim 8, wherein printing is performed by applying laser light from a side of the sheet A laminated in the multilayer laser-markable sheet.

## Patentansprüche

1. Mehrschichtiges Laser-beschriftbares Sheet für einen elektronischen Pass, umfassend drei Sheets eines Sheets A/eines Mehrschichtsheets B/eines Sheets C als grundlegende konstitutionelle Einheit, wobei
das Sheet A eine transparente Polycarbonatharzzusammensetzung umfasst, die ein thermoplastisches Polycarbonatharz und ein Laserlicht-energieabsorbierendes Mittel beinhaltet, wobei das Sheet A eine Gesamtdicke von 50 bis 200 µm aufweist;
das Mehrschichtsheet B ein farbiges Mehrschichtsheet umfasst, das Hautschichten und eine Kernschicht beinhaltet, die Hautschichten an den beiden äußersten Schichten ein thermoplastisches Polyesterharz beinhalten,
die Kernschicht des Mehrschichtsheets B ein transparentes thermoplastisches Harz beinhaltet, das ein thermoplastisches Polycarbonatharz beinhaltet,
zumindest eine Schicht der Hautschichten und der Kernschicht des Mehrschichtsheets B zumindest eine Art ausgewählt der aus einem Farbstoff und einem Pigment beinhaltet, und
das Mehrschichtsheet B eine Gesamtdicke von 100 bis 300 µm aufweist und die Kernschicht ein Verhältnis ihrer Dicke zur Gesamtdicke von 30% oder mehr und weniger als 85% aufweist; und
das Sheet C ein Sheet, das zumindest eine Art ausgewählt aus einem thermoplastischen Polyesterharz, einem thermoplastischen Polyamidharz und einem thermoplastischen Polyurethanharz beinhaltet, ein Gewebe oder Vliesstoff, das/der zumindest eine Art ausgewählt aus einem thermoplastischen Polyesterharz und einem thermoplastischen Polyamidharz beinhaltet, oder ein Laminatsheet umfasst, das das Gewebe oder den Vliesstoff und ein Sheet beinhaltet, das zumindest eine Art ausgewählt aus einem thermoplastischen Polyesterharz, einem thermoplastischen Polyamidharz und einem thermoplastischen Polyurethanharz beinhaltet, wobei das Sheet C eine Dicke von 50 bis 500 µm aufweist,
**dadurch gekennzeichnet, dass**
(i) das Sheet A ein einschichtiges Sheet beinhaltet,
oder
(ii) das Sheet A ein Mehrschichtsheet ist, das fünf Schichten oder bevorzugt drei Schichten beinhaltet, wobei die drei Schichten wie in einer Hautschicht /einer Kernschicht /einer Hautschicht so angeordnet sind, dass sich die beiden Hautschichten auf beiden äußersten Seiten befinden, wobei eine Kernschicht als eine Schicht zwischen den beiden Hautschichten angeordnet ist, und wobei die fünf Schichten durch abwechselndes Anordnen von Hautschichten und Kernschichten wie in einer Hautschicht /einer Kernschicht /einer Hautschicht / einer Kernschicht /einer Hautschicht so gebildet sind, dass sich die beiden Hautschichten auf beiden äußersten Seiten befinden, wobei
die Hautschichten ein thermoplastisches Polycarbonatharz beinhalten,
die Kernschicht eine transparente Polycarbonatharzzusammensetzung beinhaltet, die ein thermoplastisches Polycarbonatharz und ein Laserlicht-energieabsorbierendes Mittel beinhaltet,
das Sheet A eine Gesamtdicke von 50 bis 200 µm aufweist und ein Verhältnis der Dicke der Kernschicht zur Gesamtdicke des Sheets A von 20% oder mehr und weniger als 90% aufweist.

2. Mehrschichtiges Laser-beschriftbares Sheet für einen elektronischen Pass nach Anspruch 1, wobei ein Ende des Sheets C einen vorstehenden Abschnitt aufweist, der teilweise um 5 bis 100 mm aus dem Sheet A und dem Mehrschichtsheet B herausragt.

3. Mehrschichtiges Laser-beschriftbares Sheet für einen elektronischen Pass nach Anspruch 1 oder 2, beinhaltend
eine Laminierung von fünf Sheets, die das Sheet A/das Mehrschichtsheet B/das Sheet C/das Mehrschichtsheet B/das Sheet A oder das Sheet A beinhalten, oder
eine Laminierung von fünf Sheets des Sheets A/dem Mehrschichtsheet B/eines Inletklappsheets, das das Sheets C beinhaltet/dem Mehrschichtsheet B/des Sheets A.

4. Mehrschichtiges Laser-beschriftbares Sheet für einen elektronischen Pass nach Anspruch 3, wobei das Inletklappsheet ein Sheet F für einen elektronischen Pass, und einen IC-Chip und eine Antenne, die in dem Sheet F für einen elektronischen Pass bereitgestellt sind, beinhaltet,
das Sheet F für einen elektronischen Pass ein thermisch schmelzverbundenes Laminatsheet beinhaltet, das Gewebe oder Vliesstoff, das/der zumindest eine Art ausgewählt aus einem thermoplastischen Polyesterharz und einem thermoplastischen Polyurethanharz beinhaltet, und zumindest eine Art ausgewählt aus einem thermoplastischen Polyesterharz und thermoplastischem Polyamid beinhaltet, wobei das Sheet F für einen elektronischen Pass eine Dicke von 50 bis 500 µm aufweist.

5. Mehrschichtiges Laser-beschriftbares Sheet für einen elektronischen Pass nach Anspruch 1 oder 2, umfassend, unter Verwendung eines Inletsheets, die Laminierung von sechs Sheets, die das Sheet A/das Mehrschichtsheet B/das Inletsheet/das Sheet C/das Mehrschichtsheet B/das Sheets A beinhalten.

6. Mehrschichtiges Laser-beschriftbares Sheet für einen elektronischen Pass nach Anspruch 5, wobei das Inletsheet ein Sheet G für einen elektronischen Pass, und einen IC-Chip und eine Antenne, die in dem Sheet G für einen elektronischen Pass bereitgestellt sind, beinhaltet,
das Sheet G für einen elektronischen Pass eine Sheetform beinhaltet, die zumindest eine Art ausgewählt aus einem thermoplastischen Polyesterharz und einem thermoplastischen Polyurethanharz beinhaltet, oder das Sheet G für einen elektronischen Pass eine Sheetform beinhaltet, die ein Verbundmaterial beinhaltet, das zumindest eines ausgewählt aus einem thermoplastischen Polyesterharz und einem thermoplastischen Polyurethanharz und anorganischen Füllstoffen beinhaltet, oder eine Polymerlegierung, die zumindest eine Art ausgewählt aus einem thermoplastischen Polyesterharz und einem thermoplastischen Polyurethanharz beinhaltet, und ein Harz, das zumindest eine Art ausgewählt aus einem Acrylharz, einem ABS-Harz und einem amorphen Polyesterharz beinhaltet, und
das Sheet G für einen elektronischen Pass eine Dicke von 50 bis 400 µm aufweist.

7. Mehrschichtiges Laser-beschriftbares Sheet für einen elektronischen Pass nach einem der Ansprüche 1 bis 6, wobei zumindest eine Oberfläche von zumindest einem von dem Sheet A, dem Mehrschichtsheet B und dem Sheet C einem Mattieren mit einer durchschnittlichen Rauhigkeit (Ra) von 0,1 bis 5 µm unterworfen wird.

8. Elektronischer Pass, umfassend: das mehrschichtige Laser-beschriftbare Sheet für einen elektronischen Pass nach einem der Ansprüche 2 bis 7, wobei der vorstehende Abschnitt des Sheets C maschinell vernäht oder verbunden ist, der mit einer Abdeckung oder einer Rückabdeckung des elektronischen Passes maschinell vernäht und verbunden ist.

9. Lasermarkierverfahren zum Lasermarkieren des mehrschichtigen Laserbeschriftbaren Sheets für einen elektronischen Pass nach einem der Ansprüche 1 bis 7 oder des elektronischen Passes nach Anspruch 8, wobei das Drucken durch Aufbringen von Laserlicht von einer Seite des Sheets A, das in das mehrschichtige Laser-beschriftbare Sheet laminiert ist, durchgeführt wird.

## Revendications

1. Feuille multicouche marquable au laser pour un passeport électronique comprenant trois feuilles, une feuille A / une feuille multicouche B / une feuille C en tant que motifs constitutionnels de base, dans laquelle
la feuille A comprend une composition de résine de polycarbonate transparente comprenant une résine de polycarbonate thermoplastique et un agent absorbant l'énergie lumineuse du laser, la feuille A ayant une épaisseur totale de 50 à 200 µm ;
la feuille multicouche B comprend une feuille multicouche colorée comprenant des couches de peau et une couche de cœur, les couches de peau aux deux couches les plus extérieures comprenant une résine de polyester thermoplastique,
la couche de cœur de la feuille multicouche B comprenant une résine thermoplastique transparente comprenant une résine de polycarbonate thermoplastique,
au moins une couche parmi les couches de peau et la couche de cœur de la feuille multicouche B comprenant au moins un type choisi parmi un colorant et un pigment, et
la feuille multicouche B ayant une épaisseur totale de 100 à 300 µm, et la couche de cœur ayant un rapport de son épaisseur à l'épaisseur totale de 30 % ou plus et inférieur à 85 % ; et
la feuille C comprend une feuille comprenant au moins un type choisi parmi une résine de polyester thermoplastique, une résine de polyamide thermoplastique et une résine de polyuréthane thermoplastique, une étoffe tissée ou une étoffe non tissée comprenant au moins un type choisi parmi une résine de polyester thermoplastique et une résine de polyamide thermoplastique, ou une feuille stratifiée comprenant l'étoffe tissée ou l'étoffe non tissée et une feuille comprenant au moins un type choisi parmi une résine de polyester thermoplastique, une résine de polyamide thermoplastique et une résine de polyuréthane thermoplastique, la feuille C ayant une épaisseur de 50 à 500 µm,
**caractérisée en ce que**
(i) la feuille A comprend une feuille monocouche,
ou
(ii) la feuille A est une feuille multicouche comprenant cinq couches ou de préférence trois couches, dans laquelle lesdites trois couches sont disposées selon une couche de peau / une couche de cœur / une couche de peau de façon que les deux couches de peau soient sur les deux côtés les plus extérieurs avec une couche de cœur sous la forme d'une couche disposée entre les deux couches de peau, et dans laquelle lesdites cinq couches sont formées par disposition de couches de peau et de couches de cœur en alternance selon une couche de peau / une couche de cœur / une couche de peau / une couche de cœur / une couche de peau de façon que les deux couches de peau soient sur les deux côtés les plus extérieurs, dans laquelle
lesdites couches de peau comprennent une résine de polycarbonate thermoplastique,
ladite couche de cœur comprend une composition de résine de polycarbonate transparente comprenant une résine de polycarbonate thermoplastique et un agent absorbant l'énergie lumineuse du laser,
la feuille A a une épaisseur totale de 50 à 200 µm, et a un rapport de l'épaisseur de la couche de cœur à l'épaisseur totale de la feuille A de 20 % ou plus et inférieure à 90 %.

2. Feuille multicouche marquable au laser pour un passeport électronique selon la revendication 1, dans laquelle une extrémité de la feuille C a une partie saillante qui dépasse partiellement sur 5 à 100 mm depuis la feuille A et la feuille multicouche B.

3. Feuille multicouche marquable au laser pour un passeport électronique selon la revendication 1 ou 2, comprenant
une stratification de cinq feuilles comprenant la feuille A / la feuille multicouche B / la feuille C / la feuille multicouche B / la feuille A, ou
une stratification de cinq feuilles comprenant la feuille A / la feuille multicouche B / une feuille rabattable d'insert comprenant la feuille C / la feuille multicouche B / la feuille A.

4. Feuille multicouche marquable au laser pour un passeport électronique selon la revendication 3, dans laquelle la feuille rabattable d'insert comprend une feuille F pour un passeport électronique, et une puce CI et une antenne disposées dans la feuille F pour un passeport électronique,
la feuille F pour un passeport électronique comprend une feuille stratifiée collée par fusion thermique comprenant une étoffe tissée ou une étoffe non tissée comprenant au moins un type choisi parmi une résine de polyester thermoplastique et une résine de polyuréthane thermoplastique et au moins un type choisi parmi une résine de polyester thermoplastique et un polyamide thermoplastique, la feuille F pour un passeport électronique ayant une épaisseur de 50 à 500 µm.

5. Feuille multicouche marquable au laser pour un passeport électronique selon la revendication 1 ou 2, comprenant, par utilisation d'une feuille d'insert, une stratification de six feuilles comprenant la feuille A / la feuille multicouche B / la feuille d'entrée / la feuille C / la feuille multicouche B / la feuille A.

6. Feuille multicouche marquable au laser pour un passeport électronique selon la revendication 5, dans laquelle la feuille d'insert comprend une feuille G pour un passeport électronique, et une puce CI et une antenne disposées dans la feuille G pour un passeport électronique,
la feuille G pour un passeport électronique comprend une forme de feuille comprenant au moins un type choisi parmi une résine de polyester thermoplastique et une résine de polyuréthane thermoplastique, ou la feuille G pour un passeport électronique comprend au moins une forme de feuille comprenant un matériau composite comprenant au moins l'un choisi parmi une résine de polyester thermoplastique et une résine de polyuréthane thermoplastique et des charges inorganiques, ou un alliage polymère comprenant au moins un type choisi parmi une résine de polyester thermoplastique et une résine de polyuréthane thermoplastique et une résine d'au moins un type choisi parmi une résine acrylique, une résine ABS et une résine de polyester amorphe, et
la feuille G pour un passeport électronique a une épaisseur de 50 à 400 µm.

7. Feuille multicouche marquable au laser pour un passeport électronique selon l'une quelconque des revendications 1 à 6, dans laquelle au moins une surface d'au moins l'une parmi la feuille A, la feuille multicouche B et la feuille C est soumise à un matage avec une rugosité moyenne (Ra) de 0,1 à 5 µm.

8. Passeport électronique comprenant : la feuille multicouche marquable au laser pour un passeport électronique selon l'une quelconque des revendications 2 à 7, la partie saillante de la feuille C qui est liée par couture à la machine ou collée, ou qui est liée par couture à la machine et collée avec une couverture ou un dos du passeport électronique.

9. Procédé de marquage au laser pour marquer au laser la feuille multicouche marquable au laser pour un passeport électronique selon l'une quelconque des revendications 1 à 7 ou le passeport électronique selon la revendication 8, dans lequel une impression est effectuée par application d'une lumière laser depuis un côté de la feuille A stratifiée dans la feuille marquable au laser multicouche.
